# FASCICULE DE BREVET EUROPEEN

(11) **EP 1 409 431 B1**
(45) Date de publication et mention de la délivrance du brevet: **15.11.2006**
(21) Numéro de dépôt: 02791507.3
(22) Date de dépôt: 23.07.2002
(51) Int. Cl.: C04B 28/16, C04B 24/26, C04B 103/40

(54) **UTILISATION DE DISPERSANT POUR COMPOSITIONS AQUEUSES DE SULFATE DE CALCIUM ANHYDRE ET MELANGE DE DISPERSANTS POUR DE TELLES COMPOSITIONS**
VERWENDUNG VON DISPERGIERMITTEL FÜR WÄSSERIGE CALCIUMSULFAT-ANHYDRIT ZUSAMMENSETZUNGEN UND DISPERGIERMITTELGEMISCHE FÜR SOLCHE ZUSAMMENSETZUNGEN
USE OF DISPERSANT FOR ANHYDROUS CALCIUM SULPHATE AQUEOUS COMPOSITIONS AND DISPERSANT MIXTURE FOR SUCH COMPOSITIONS

(30) Priorité: 23.07.2001 FR 0109802
(43) Date de publication de la demande: 21.04.2004
(73) Titulaire: Chryso S.A.S., 92446 Issy-Les-Moulineaux (FR)
(72) Inventeur: MOSQUET, Martin, F-45300 Dandonville (FR); MAITRASSE, Philippe, F-45170 Chilleurs aux Bois (FR); DUBOIS, Isabelle, F-77210 Avon (FR)
(74) Mandataire: Gaucherand, Michel
(86) Numéro de dépôt international: PCT/FR2002/002629
(87) Numéro de publication internationale: WO 2003/011790

## Description

La présente invention concerne l'utilisation d'un dispersant de type polycarboxylique sélectionné parmi les dispersants de ce type pour des compositions aqueuses de sulfate de calcium anhydre ayant des propriétés hydrauliques permettant aussi et à la fois d'améliorer le maintien de la fluidité dans le temps et de contrôler les temps de début et/ou de fin de prise desdites compositions.

L'invention concerne également l'utilisation d'un mélange de dispersants de type polycarboxylique dont l'un au moins est un dispersant sélectionné parmi les dispersants de ce type pour des compositions aqueuses de sulfate de calcium anhydre ayant des propriétés hydrauliques permettant aussi et à la fois d'améliorer le maintien de la fluidité dans le temps et de contrôler les temps de début et/ou de fin de prise desdites compositions.

L'invention a également pour objet des compositions aqueuses de sulfate de calcium anhydre présentant des propriétés hydrauliques comprenant un tel dispersant sélectionné ou un mélange de dispersants dont l'un au moins est le dispersant sélectionné.

Dans le cadre de la présente invention par compositions aqueuses de sulfate de calcium anhydre, on entend des compositions dans lesquelles le sulfate de calcium anhydre présentant des propriétés hydrauliques représente au moins 80 % en poids du liant hydraulique total.

Il est connu que des compositions aqueuses de sulfate de calcium anhydre ayant des propriétés hydrauliques sont notamment utilisées pour la réalisation de revêtements horizontaux tels que des chapes de sols.

L'addition d'un dispersant de type polycarboxylique à des compositions aqueuses de sulfate de calcium anhydre ayant des propriétés hydrauliques est censée :
- permettre une réduction de la teneur en eau ;
- empêcher des phénomènes incontrôlables de ségrégation et de ressuage ;
- et/ou maintenir dans le temps la fluidité desdites compositions,
toutes les performances précitées devant en outre permettre des temps de prise (temps de début de prise et de fin de prise) compatibles avec l'application visée.

Parmi les dispersants bien connus permettant à des compositions de sulfate de calcium anhydre à teneur réduite en eau, un maintien prolongé de la fluidité, on peut citer les produits soit issus de la condensation du formaldéhyde et de naphtalènes sulfonés, soit issus de la condensation du formaldéhyde et de mélamines sulfonées.

Mais il est également connu et revendiqué que des dispersants de type polycarboxyliques, constitués essentiellement de polymères comprenant une chaîne polycarboxylique éventuellement salifiée à laquelle sont fixés des chaînes polyéthers par l'intermédiaire de fonction ester, sont mis en oeuvre dans des compositions aqueuses de particules minérales pulvérulentes, en particulier de sulfate de calcium anhydre ayant des propriétés hydrauliques et/ou de sulfate de calcium hémihydrate pour y exercer non seulement leur intéressante propriété dispersante, mais également et simultanément l'une ou l'autre des propriétés précédemment évoquées, telles que par exemple l'amélioration de la fluidité des compositions aqueuses de sulfate de calcium anhydre hémihydrate, la maîtrise de la formation de mousse lors de la préparation et de la mise en oeuvre desdites compositions, le maintien dans le temps des caractéristiques rhéologiques, ou autres.

Mais il est aussi connu que les dispersants de type polycarboxylique, dès lors qu'ils sont utilisés dans des compositions aqueuses de sulfate de calcium anhydre ou hémihydrate peuvent provoquer des variations plus ou moins importantes et aléatoires des temps de prise du sulfate de calcium, variations particulièrement gênantes quand elles se manifestent par des retards du début de prise et des décalages souvent considérables des fins de prise, de telle sorte que le temps de prise devient lui-même aléatoire et peut être allongé de manière préjudiciable.

Tel est, en effet, le phénomène qui peut se produire lorsque des compositions aqueuses de sulfate de calcium anhydre contenant un dispersant de type polycarboxylique, interviennent dans la réalisation de revêtements horizontaux tels que des chapes de sol, ou encore lorsque des compositions aqueuses de sulfate hémihydrate contenant également un dispersant de type polycarboxylique alimentent des chaînes de fabrication de plaques de plâtre ou de carreaux de plâtre.

Dans le cas, par exemple, de la réalisation de chapes de sols à partir de compositions aqueuses de sulfate de calcium anhydre ayant des propriétés hydrauliques contenant un dispersant de type polycarboxylique, le début de prise et la fin de prise de la composition aqueuse de sulfate de calcium anhydre mise en oeuvre doivent être nécessairement précis et peu variables, lors d'une opération de réalisation et en particulier d'opérations successives sur un même site à traiter tant est indispensable et irréaliste l'occupation prolongée d'une surface industrielle, au-delà d'un temps raisonnable et accepté d'immobilisation.

De plus, un autre effet préjudiciable bien connu de l'état de l'art se manifeste dans les compositions aqueuses de sulfate de calcium anhydre ayant des propriétés hydrauliques et destinées à la réalisation de chapes de sol, lorsque ces compositions contiennent un dispersant connu, y inclus un dispersant de type polycarboxylique, ce dispersant étant à l'origine d'une perte importante dans le temps de la fluidité des composition mises en oeuvre, dans le même temps où se manifeste aussi la variation aléatoire des temps de début et de fin de prise desdites compositions telle que précédemment évoquée.

C'est pourquoi, les procédés à l'échelle industrielle de fabrication en continu de coompositions aqueuse de sulfate de calcium anhydre destinées à la réalisation de chapes de sols nécessitent une régularité des temps de début et fin de prise et un maintien dans le temps de la fluidité, quelque soit le dispersant utilisé, en particulier quand le dispersant est de type polycarboxylique, de telle sorte que les procédés industriels de fabrication en continu de compositions pour chapes de sols soient protégées des variations aléatoires des temps de prise et assurées du maintien de la fluidité desdites compositions mises en oeuvre, variations attribuables à la structure chimique de l'agent dispersant de type polycarboxylique et/ou aux variations éventuelles de la quantité de cet agent dans les compositions aqueuses de sulfate de calcium anhydres mises en oeuvre.

De nombreuses publications attestent de l'importance des travaux de recherche portant sur les dispersants de type polycarboxylique, mais également portant sur d'autres caractéristiques conjointes de ces dispersants accompagnant simultanément la première et essentielle caractéristique de dispersion.

Dans un premier document (EP 0725044), est décrite une composition aqueuse destinée à la réalisation de chapes de sols ayant une première spécificité autonivelante et une deuxième spécificité de disposer d'une grande fluidité pendant un temps long, lui permettant d'être transportée depuis un site de production jusqu'à un site de travail.

Cette composition aqueuse comprend, outre des aggrégats, du ciment, du sulfate de calcium anhydre, un dispersant de type polycarboxylique et d'autres agent apportant des propriétés d'épaississement, d'antimousse, d'accélérateur, de prise, d'inhibiteur de retrait.

L'agent dispersant mis en oeuvre est un copolymère de type polycarboxylique résultant de la copolymérisation de deux monomères,
- le premier étant du type : 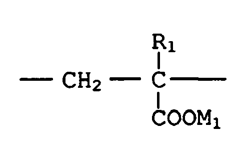 qui est un acide monocarboxylique insaturé
- le deuxième étant du type : 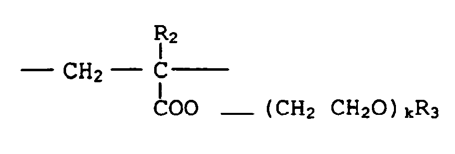 qui est un ester de l'acide (méth)acrylique ayant des groupements d'oxyde d'éthylène.

L'agent dispersant présent dans la composition aqueuse intervient simultanément par sa fonction de dispersant mais aussi par une fonction fluidisante importante pour ladite composition. Toutefois, est présent dans la composition un accélérateur de prise pour compenser la variation aléatoire bien connue des temps de début et de fin de prise provoquée par ce dispersant.

Dans un autre document (GB 2 319 522A), une composition aqueuse de plâtre artificiel, ayant un pH de 5 à 10, est décrite renfermant en tant qu'agent dispersant et plastifiant, un copolymère obtenu par polymérisation radicalaire d'un monomère (a) de monoester de polyalkylène glycol contenant 2 à 300 molécules d'oxyalkylène en C₂-C₃ avec au moins un monomère (b) choisi parmi les acides monocarboxyliques insaturés, les acides dicarboxyliques insaturés et les acides allylsulfoniques. Selon ce brevet, une gâchée de plâtre artificiel avec un pH ajusté entre 5 et 10 et renfermant l'agent simultanément dispersant et plastifiant précité présente à la fois une bonne dispersion des particules de plâtre et une excellente fluidité de la composition.

Dans un autre document (US 6,264,739), est décrit un agent dispersant mis en oeuvre dans une composition aqueuse de sulfate de calcium hémihydrate qui, simultanément, révèle un excellent effet de stabilisation de la mousse formée lors de la préparation de la composition. Cet agent de type polycarboxylique à la fois dispersant des particules de plâtre et stabilisant, de la mousse formée, est obtenu par copolymérisation radicalaire d'un monomère a) de monoester de polyalkylène glycol au plus 300 molécules d'oxyalkylène en C2 et/ou C3, avec au moins un monomère b) choisi parmi les acides monocarboxyliques insaturés, les acides polycarboxyliques insaturés et les acides alkyl sulfoniques. Comme le précise ce document, une composition aqueuse de sulfate de calcium hémihydrate renfermant ce copolymère de type polycarboxylique, manifeste simultanément une bonne dispersion des particules de sulfate de calcium hémihydrate mais également une bonne stabilisation de l'effet de mousse qui apparaît lors de la préparation de ladite composition.

Dans un autre document (EP0931799) est décrite une composition aqueuse de ciment qui comprend un ciment ou liant hydraulique, tel que du ciment de Portland, un ciment alumineux, des mélanges de ciments et éventuellement des matériaux hydrauliques comme du gypse et un adjuvant qui est un copolymère de type polycarboxylique résultant de la copolymérisation de monomères de :
Type 1 : 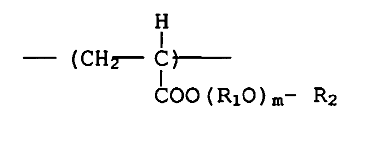 qui est un ester de l'acide acrylique ayant des groupements d'oxyde d'éthylène et/ou d'oxyde de propylène.
Type 2 : 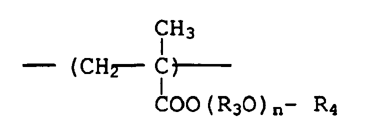 qui est un ester de l'acide méthacrylique ayant des groupements d'oxyde d'éthylène et/ou d'oxyde de propylène.
Type 3 : 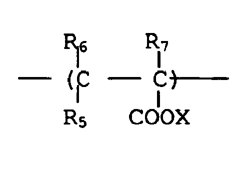 qui est un acide mono ou polycarboxylique insaturé.

La présence de cet adjuvant de type polycarboxylique, tel qu'il est revendiqué, dans les compositions aqueuses de ciment, mortier, ou béton, s'impose par le fait que, simultanément, il tient son rôle de dispersant, et intervient dans cette même composition aqueuse comme agent de conservation de la fluidité aussi bien à haute température qu'à basse température en conservant à ladite composition une excellente capacité d'étalement.

Dans un autre document (EP0753488) est décrit et revendiqué un dispersant pour des compositions de ciment. Cet agent dispersant est un copolymère polycarboxylique obtenu par la copolymérisation :
- d'un monomère a) du type : 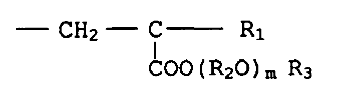 qui est un ester d'un acide alkoxypolyalkylène glycol mono(meth)acrylique
- avec un monomère b) du type : 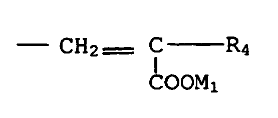 qui est un acide (meth)acrylique

L'utilisation de ce dispersant de type polycarboxylique dans les compositions de ciment est justifiée par le fait que non seulement il intervient avec sa spécificité bien connue de dispersant pour les particules de ciment, mais aussi, et simultanément avec cette première et principale spécificité, il intervient dans ces compositions de ciment comme un agent apporteur d'autres caractéristiques fondamentales, en particulier celles d'être un agent d'augmentation et de maintien de la coulabilité des compositions de ciment malgré une réduction drastique de la quantité d'eau présente dans la composition, de régulation de la quantité d'air entrant dans la composition et en finalité, d'obtention d'un béton de haute résistance mécanique.

Dans un autre document, enfin, (EP1052232) est également décrit et revendiqué un dispersant de type polycarboxylique pour des compositions de ciment pouvant contenir éventuellement du gypse.

Ce dispersant de type polycarboxylique, qui se présente sous une forme pulvérulente, est un copolymère qui résulte de la copolymérisation :
- d'un monomère du type 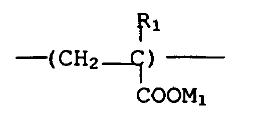 qui est un acide (méth)acrylique
- avec un autre monomère du type : 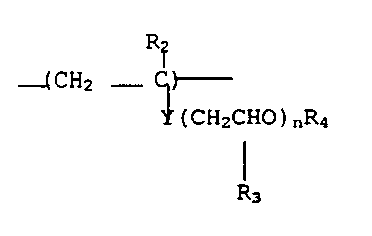 qui est un composé à structure acrylique ou méthacrylique comprenant une chaîne polyalkylène.

L'utilisation de ce dispersant de type polycarboxylique est d'apporter à la composition de ciment, simultanément deux caractéristiques essentielles que sont la dispersion des particules de ciment et une excellente fluidité de la composition, malgré une réduction de la quantité d'eau présente.

Ainsi, l'observation de l'état de la technique :
- malgré les substantielles améliorations proposées et apportées par les dispersants polycarboxyliques aux compositions aqueuses de sulfate de calcium hémihydrate ou à des compositions aqueuses de ciment pouvant contenir du sulfate de calcium anhydre, améliorations qui associent à la fois la caractéristique essentielle de dispersion et une autre caractéristique associée telle que par exemple l'amélioration ou le maintien de la fluidité desdites compositions malgré une réduction importante de la quantité d'eau ou encore la maîtrise de l'effet mousse lors de la préparation des compositions ou d'autres caractéristiques telles qu'évoquées précédemment ;
- ne suggère ni ne traite de cet inconvénient majeur qu'est l'apparition d'une variabilité aléatoire des temps de début et de fin de prise, et de la perte rapide de la fluidité des compositions aqueuses contenant en tout ou partie du sulfate de calcium anhydre ayant des propriétés hydrauliques, ces inconvénients étant apportés auxdites compositions par les dispersants de type polycarboxylique, au moment de leur mise en oeuvre dans la réalisation de chapes de sols.

La demanderesse a maintenant trouvé un dispersant de type polycarboxylique sélectionné parmi les dispersants de ce type pour compositions aqueuses de sulfate de calcium anhydre ayant des propriétés hydrauliques, qui permet simultanément à son action dispersante d'améliorer le maintien de la fluidité dans le temps et de contrôler les temps de début et/ou de fin de prise des compositions aqueuses de sulfate de calcium anhydre par rapport à l'utilisation de dispersants de type polymélanine sulfonée.

Plus précisément, l'invention a pour objet l'utilisation d'un dispersant polycarboxylique sélectionné parmi les dispersants de ce type pour des compositions aqueuses de sulfate de calcium anhydre ayant des propriétés hydrauliques, qui permet simultanément à son action dispersante d'améliorer le maintien de la fluidité dans le temps et de contrôler les temps de début et/ou de fin de prise, ce dispersant sélectionné comprenant au moins 75 % en nombre d'un enchaînement linéaire aléatoire d'unités structurelles (1) et (2) représentées par les formules suivantes : 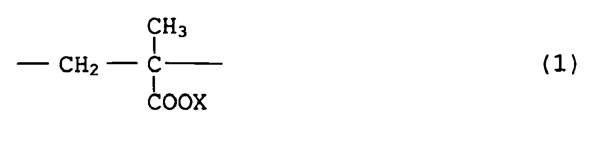 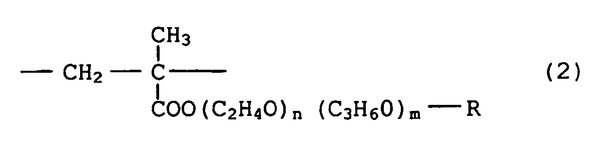 dans lesquelles X représente un atome d'hydrogène, un métal alcalin, un métal alcalino-terreux ou un ammonium, lesdites unités structurelles (1) pouvant être identiques ou différentes; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes; le rapport du nombre d'unités structurelles (2), sur le nombre total des unités structurelles (1) et (2), étant compris entre 5 % et 60 %.

Par amélioration du maintien dans le temps de la fluidité de compositions aqueuses de sulfate de calcium anhydre ayant des propriétés hydrauliques, associée à un contrôle des temps de début de prise et/ou de fin de prise desdites cmpositions, on entend que les dispersants mis en oeuvre dans lesdites compositions permettent de conserver un étalement environ compris entre 200 et 290 mm pendant environ trois heures et n'entrainent ni une variation significative des temps de début et de fin de prise, pouvant se manifester par une augmentation sensible de ces temps, ni une variation significative du temps de prise qui est la différence entre des temps de fin de prise et de début de prise. Ces variations significatives se manifestent généralement par un retard suffisamment marqué des temps de début et de fin de prise, retard qui perturberait les méthodes habituelles de réglage de début et de fin de prise pratiquées en particulier dans les procédés de réalisation de revêtements tels que par exemple des chapes de sols.

Le dispersant de type carboxylique sélectionné utilisé dans une composition aqueuse de sulfate de calcium anhydre selon l'invention peut renfermer au plus 25% en nombre d'unités structurelles autres que les unités structurelles (1) et (2). A titre d'exemples de telles unités, on peut citer des unités formées à partir de monomères insaturés comprenant des groupements sulfonés ou des groupements d'esters d'alkyles. A titre de telles unités, on évitera cependant celles issues de monomères connus dans l'art pour engendrer un retard suffisamment marqué des temps de prise, comme par exemple des monomères phosphonés ou phosphatés.

Conformément à une variante préférentielle de l'invention, le dispersant de type polycarboxylique sélectionné parmi les dispersants de ce type utilisé dans les compositions selon l'invention, comprend au moins 90 % en nombre d'unités structurelles (1) et (2), plus préférentiellement 100 % en nombre d'unités structurelles (1) et (2) en ne prenant pas en compte les unités de terminaison de chaîne liées aux méthodes d'amorçage de polymérisation et de contrôle de longueur de chaîne.

De préférence encore, le dispersant sélectionné de l'invention a une structure chimique présentant l'une ou plusieurs des caractéristiques qui suivent :
- m est égal à zéro et n est un nombre entier variant de 5 à 160 ;
- encore mieux, m est égal à zéro et n est un nombre entier variant de 7 à 120;
- R représente un groupe alkyle de 1 à 5 atomes de carbone ;
- encore mieux, R est un radical méthyle, éthyle, propyle ou butyle.

De préférence, le dispersant sélectionné utilisé dans le cadre de l'invention, est tel que le rapport du nombre d'unités structurelles (2), qui correspondent à des esters des unités structurelles (1), sur le nombre total des unités structurelles (1) et (2), est compris entre 5 % et 50 %.

Egalement, l'invention a pour objet des compositions aqueuses de sulfate de calcium anhydre ayant des propriétés hydrauliques comprenant un dispersant qui permet simultanément à son action dispersante d'améliorer le maintien de la fluidité dans le temps et de contrôler les temps de début et/ou de fin de prise des compositions aqueuses de sulfate de calcium anhydre, ledit dispersant sélectionné parmi les dispersants de type polycarboxylique comprenant au moins 75 % en nombre d'un enchaînement linéaire aléatoire d'unités structurelles (1) et (2) représentées par les formules suivantes : 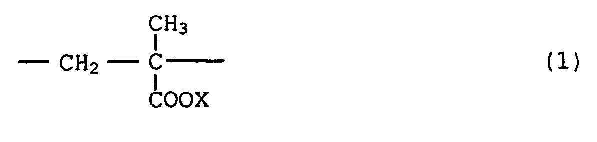 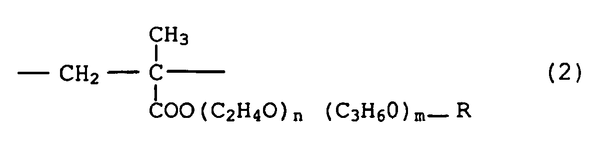 dans lesquelles X représente un atome d'hydrogène, un métal alcalin, un métal alcalino-terreux ou un ammonium, lesdites unités structurelles (1) pouvant être identiques ou différentes; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes; le rapport du nombre d'unités structurelles (2), sur le nombre total des unités structurelles (1) et (2), étant compris entre 5 % et 60 %.

Les meilleurs performances de telles compositions ont été atteintes avec les dispersants préférentiels sélectionnés parmi les dispersants de type polycarboxylique présentés précédemment.

Notamment, de bons résultats ont été obtenus avec des dispersants selon l'invention comprenant 100 % en nombre d'unités structurelles (1) et (2) dans lesquelles m est égal à zéro, n varie de 7 à 120 et pour lesquels le rapport du nombre d'unités structurelles (2), sur le nombre total des unités structurelles (1) et (2), est compris entre 5 % et 50 %, plus préférentiellement compris entre 15 % et 40 %.

Le dispersant sélectionné formé des unités structurelles (1) et (2) évoqué ci-dessus pour compositions aqueuses de sulfate de calcium anhydre ayant des propriétés hydrauliques peut être utilisé seul ou en combinaison avec un autre dispersant sélectionné dans la famille des dispersants comprenant les unités structurelles (1) et (2). En effet, ladite dispersion peut être réalisée par l'utilisation d'au moins un dispersant sélectionné tel que défini précédemment dans le cadre de l'invention. Ainsi, la dispersion de sulfate de calcium anhydre ayant des propriétés hydrauliques dans les compositions aqueuses selon l'invention peut être assurée par un mélange de dispersants tels que ceux sélectionnés précédemment dans le cadre de l'invention.

Le dispersant formé des unités structurelles (1) et (2) sélectionné dans le cadre de l'invention peut également être utilisé en combinaison avec un autre dispersant choisi, par exemple, parmi ceux issus de la condensation de naphtalène sulfoné avec du formaldéhyde ou ceux issus de la condensation de mélamine avec du formaldéhyde et un composé sulfoné.

Par ailleurs, la dispersion de sulfate de calcium anhydre dans les compositions aqueuses de sulfate de calcium anhydre ayant des propriétés hydrauliques peut également être assurée par un mélange de dispersants tel que présenté ci-après.

En effet, l'invention a également pour objet l'utilisation d'un mélange de dispersants pour compositions aqueuses de sulfate de calcium anhydre qui permet simultanément à son action dispersante d'améliorer le maintien de la fluidité dans le temps et de contrôler les temps de début et/ou de fin de prise, ledit mélange, ramené à 100 % en poids des dispersants exprimé en sec, comprenant :
- de 50 à 90 % en poids exprimé en sec d'un dispersant sélectionné parmi les dispersants de type polycarboxylique comprenant au moins 75 % en nombre d'un enchaînement linéaire aléatoire d'unités structurelles (1) et (2), et
- de 10 à 50 % en poids exprimé en sec d'un autre dispersant de type polycarboxylique comprenant au moins 75 % en nombre d'un enchaînement linéaire aléatoire d'unités structurelles (3) et (4),
les unités structurelles (1), (2), (3) et (4) étant représentées par les formules suivantes : 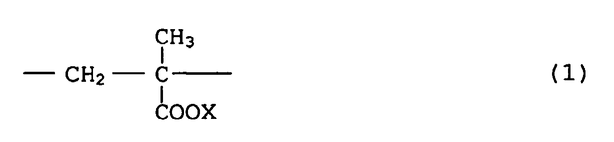 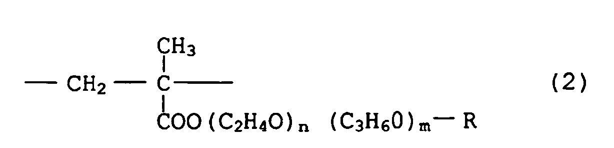 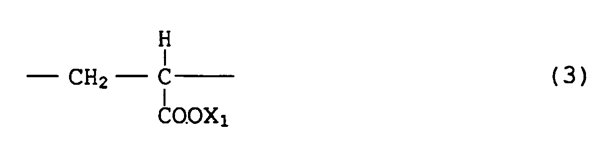 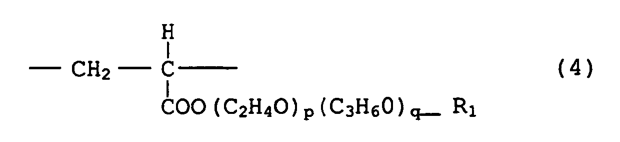 dans lesquelles X et X₁, identiques ou différents, représentent un atome d'hydrogène, un métal alcalin, un métal alcalino-terreux ou un ammonium, lesdites unités structurelles (1) pouvant être identiques ou différentes et lesdites unités structurelles (3) pouvant être identiques ou différentes; n et p, de valeurs identiques ou différentes, sont des nombres entiers variant de 1 à 250, m et q, de valeurs identiques ou différentes, sont des nombres entiers variant de 0 à 100 avec m < n et q < p, les groupes d'oxyde de propylène pouvant être distribués ou non de façon aléatoire parmi les groupes d'oxyde d'éthylène ; R et R₁, identiques ou différents, représentent un groupe alkyle de 1 à 12 atomes de carbone, lesdites unités structurelles (2) pouvant être identiques ou différentes et lesdites unités structurelles (4) pouvant être identiques ou différentes.

Le dispersant sélectionné formé des unités structurelles (1) et (2) utilisé dans le mélange de dispersants pour composition aqueuse de sulfate de calcium anhydre selon l'invention peut renfermer au plus 25 % en nombre d'unités structurelles autres que les unités structurelles (1) et (2). A titre d'exemples de telles unités, on peut citer des unités formées à partir de monomères insaturés comprenant des groupements sulfonés ou des groupements d'esters d'alkyles, ou des unités structurelles de type (3) et/ou (4).

De même, le dispersant autre formé des unités structurelles (3) et (4) utilisé dans le mélange de dispersants pour composition aqueuse de sulfate de calcium anhydre selon l'invention peut renfermer au plus 25 % en nombre d'unités structurelles autres que les unités structurelles (3) et (4). A titre d'exemples de telles unités, on peut citer des unités formées à partir de monomères insaturés comprenant des groupements sulfonés ou des groupements d'esters d'alkyles, ou des unités structurelles de type (1) et/ou (2).

Conformément à une variante préférentielle de l'invention, le dispersant sélectionné formé des unités structurelles (1) et (2) utilisé dans le mélange de dispersants pour les compositions selon l'invention, comprend 100 % en nombre d'unités structurelles (1), (2), et/ou le dispersant formé des unités structurelles (3) et (4), utilisé dans le mélange de dispersants pour les compositions selon l'invention, comprend 100 % en nombre d'unités structurelles (3) et (4), en ne prenant pas en compte les unités de terminaison de chaîne liées aux méthodes d'amorçage de polymérisation et de contrôle de longueur de chaîne.

De préférence encore, le mélange de dispersants de l'invention comprend des unités structurelles (1), (2), (3) et (4) dont les structures chimiques présentent l'une ou plusieurs des caractéristiques qui suivent :
- m et q sont égaux à zéro, et n et p sont des nombres entiers variant de 5 à 160 ;
- encore mieux, m et q sont égaux à zéro, et n et p sont des nombres entiers variant de 7 à 120;
- R et R₁, identiques ou différents, représentent un groupe alkyle de 1 à 5 atomes de carbone ;
- encore mieux, R et R₁, identiques ou différents, sont un radical méthyle, éthyle, propyle ou butyle.

De préférence, le mélange de dispersants utilisé dans le cadre de l'invention, est tel que le rapport du nombre d'unités structurelles (2) et (4), qui correspondent respectivement à des esters des unités structurelles (1) et (3), sur le nombre total des unités structurelles (1), (2), (3) et (4), est compris entre 5 % et 60 %.

L'invention a également pour objet des compositions aqueuses de sulfate de calcium anhydre ayant des propriétés hydrauliques comprenant un mélange de dispersants qui permet simultanément à son action dispersante d'améliorer le maintien de la fluidité dans le temps et de contrôler les temps de début et/ou de fin de prise de compositions aqueuses de sulfate de calcium anhydre, ledit mélange, ramené à 100 % en poids des dispersants exprimé en sec, comprenant :
- de 50 à 90 % en poids exprimé en sec d'un dispersant sélectionné parmi les dispersants de type polycarboxylique comprenant au moins 75 % en nombre d'un enchaînement linéaire aléatoire d'unités structurelles (1) et (2), et
- de 10 à 50 % en poids exprimé en sec d'un autre dispersant de type polycarboxylique comprenant au moins 75 % en nombre d'un enchaînement linéaire aléatoire d'unités structurelles (3) et (4),
les unités structurelles (1), (2), (3) et (4) étant représentées par les formules suivantes : 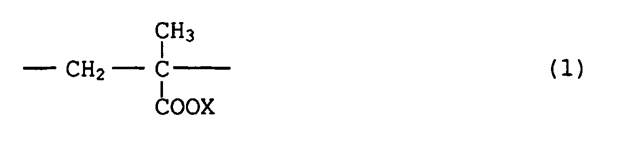 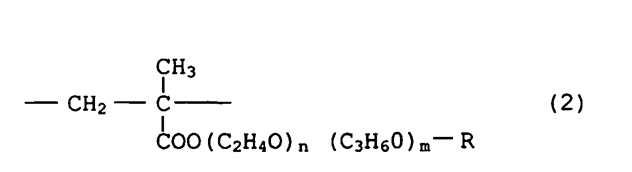 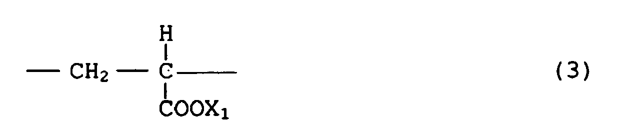 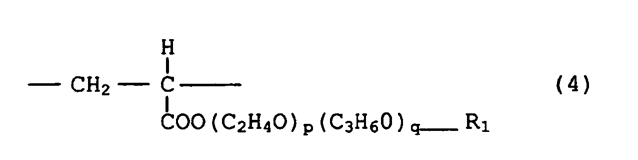 dans lesquelles X et X₁ identiques ou différents représentent un atome d'hydrogène, un métal alcalin, un métal alcalino-terreux ou un ammonium, les unités structurelles (1) pouvant être identiques ou différentes et les unités structurelles (3) pouvant être identiques ou différentes; n et p, de valeurs identiques ou différentes, sont des nombres entiers variant de 1 à 250, m et q, de valeurs identiques ou différentes, sont des nombres entiers variant de 0 à 100 avec m < n et q < p, les groupes d'oxyde de propylène pouvant être distribués ou non de façon aléatoire parmi les groupes d'oxyde d'éthylène ; R et R₁, identiques ou différents, représentent un groupe alkyle de 1 à 12 atomes de carbone, les unités structurelles (2) pouvant être identiques ou différentes et les unités structurelles (4) pouvant être identiques ou différentes.

De telles compositions en effet renfermant l'un des mélanges de dispersants selon l'invention présentent aussi et simultanément à son action dispersante d'excellentes performances en terme de maintien dans le temps de fluidité associé à des temps de début et/ou de fin de prise contrôlés.

Divers autres additifs connus de l'homme de l'art pour les compositions de sulfate de calcium anhydre ayant des propriétés hydrauliques peuvent, en outre, être ajoutés aux compositions selon l'invention. A titre d'exemple, on peut citer des agents désaérants, tels que les agents antimousse, utilisés dans le but de contrôler le niveau d'air entraîné au moment de la réalisation de la composition aqueuse de sulfate de calcium anhydre. Dans certains cas, l'agent désaérant peut être avantageusement formulé avec l'agent dispersant selon des méthodes connues de l'homme de l'art.

L'invention a aussi pour objet un mélange de dispersants pour compositions aqueuses de sulfate de calcium anhydre, ce mélange étant caractérisé en ce que ledit mélange de dispersants, ramené à 100 % en poids des dispersants exprimé en sec, comprend :
- de 50 à 90 % en poids exprimé en sec d'un dispersant sélectionné parmi les dispersants de type polycarboxylique comprenant au moins 75 % en nombre d'un enchaînement linéaire aléatoire d'unités structurelles (1) et (2), et
- de 10 à 50 % en poids exprimé en sec d'un autre dispersant de type polycarboxylique comprenant au moins 75 % en nombre d'un enchaînement linéaire aléatoire d'unités structurelles (3) et (4),
les unités structurelles (1), (2), (3) et (4) étant représentées par les formules suivantes : 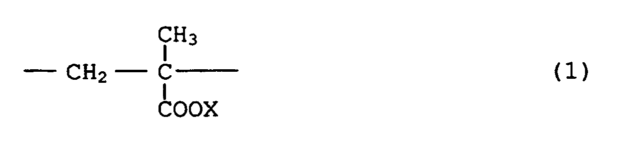 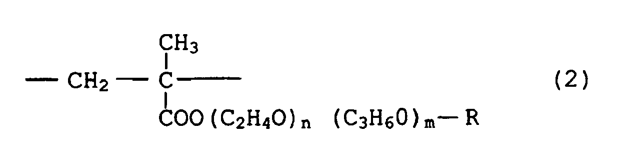 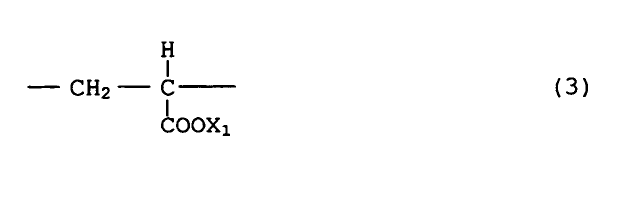 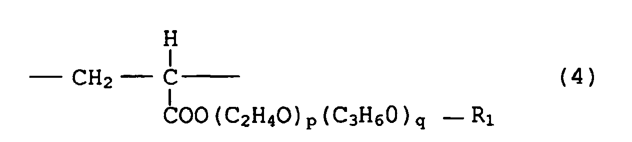 dans lesquelles X et X₁, identiques ou différents, représentent un atome d'hydrogène, un métal alcalin, un métal alcalino-terreux ou un ammonium, les unités structurelles (1) pouvant être identiques ou différentes et les unités structurelles (3) pouvant être identiques ou différentes; n et p, de valeurs identiques ou différentes, sont des nombres entiers variant de 1 à 250, m et q, de valeurs identiques ou différentes, sont des nombres entiers variant de 0 à 100 avec m < n et q < p, les groupes d'oxyde de propylène pouvant être distribués ou non de façon aléatoire parmi les groupes d'oxyde d'éthylène ; R et R₁, identiques ou différents, représentent un groupe alkyle de 1 à 12 atomes de carbone, les unités structurelles (2) pouvant être identiques ou différentes et les unités structurelles (4) pouvant être identiques ou différentes.

Avantageusement, la quantité de dispersant ou de mélange de dispersants selon l'invention additionnée à la composition aqueuse de sulfate de calcium anhydre est comprise entre 0,01 % et 0,5 % en poids en sec rapporté au poids de sulfate de calcium anhydre.

Divers procédés de fabrication du dispersant utilisé dans le cadre de l'invention peuvent être envisagés.

Selon un premier mode de fabrication, le dispersant sélectionné formé des unités structurelles (1) et (2) selon l'invention peut être obtenu par copolymérisation d'un monomère (a), représenté par la formule (A) suivante, avec au moins un monomère (b), sélectionné parmi les composés représentés par la formule (B) suivante: 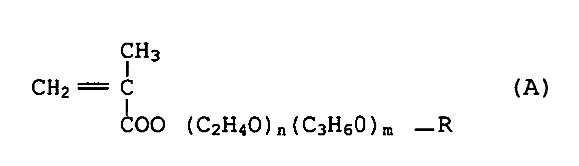 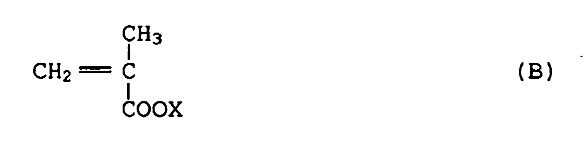 dans lesquelles X représente un atome d'hydrogène, un métal alcalin, un métal alcalino-terreux ou un ammonium; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène ; R représente un groupe alkyle de 1 à 12 atomes de carbone.

De même, selon un premier mode de fabrication, le dispersant autre formé des unités structurelles (3) et (4) selon l'invention peut être obtenu par copolymérisation d'un monomère (a'), représenté par la formule (A') suivante, avec au moins un monomère (b'), sélectionné parmi les composés représentés par la formule (B') suivante: 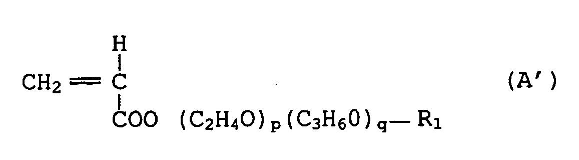 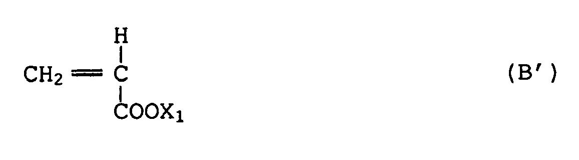 dans lesquelles X₁ représente un atome d'hydrogène, un métal alcalin, un métal alcalino-terreux ou un ammonium; p est un nombre entier variant de 1 à 250, q est un nombre entier variant de 0 à 100 avec q < p, les groupes d'oxyde de propylène pouvant être distribués ou non de façon aléatoire parmi les groupes d'oxyde d'éthylène ; R₁ représente un groupe alkyle de 1 à 12 atomes de carbone.

Selon un second mode de fabrication, le dispersant sélectionné formé des unités structurelles (1) et (2) selon l'invention peut être obtenu par estérification partielle, catalysée à l'aide d'une base, par réaction d'un acide polyméthacrylique avec un polyéther contenant un groupe hydroxyle libre pouvant réagir avec une fonction carboxylique dudit acide polyméthacrylique, de formule générale :

HO-(C₂H₄O)ₙ(C₃H₆O)ₘ-R

dans laquelle n est un nombre entier variant de 1 à 250, m est un nombre entier variant de 0 à 100 avec m < n, les groupes d'oxyde d'éthylène et d'oxyde de propylène étant distribués ou non de manière aléatoire, et R représente un groupe alkyle de 1 à 12 atomes de carbone.

Dans le cadre du second mode de fabrication du dispersant sélectionné selon l'invention, le polyéther ou alkyléther de polyalkylène glycol, de formule générale HO- (C₂H₄O)ₙ(C₃H₆O)ₘ-R est de préférence tel que :
- R représente un groupe alkyle de 1 à 5 atomes de carbone, encore mieux, R est un radical méthyle, éthyle, propyle ou butyle;
- m est égal à 0 et n est un nombre entier variant de 5 à 160, de préférence n est un nombre entier variant de 7 à 120.

Dans le cadre du second mode de fabrication du dispersant sélectionné, l'acide polyméthacrylique est obtenu par polymérisation d'un mélange de monomères comprenant au moins 75 % en mole d'acide méthacrylique et au plus 25 % en mole d'un comonomère d'acide méthacrylique, de préférence encore par polymérisation de 100 % d'acide méthacrylique sans tenir compte des extrémités.

De même, selon un second mode de fabrication, le dispersant autre formé des unités structurelles (3) et (4) peut être obtenu par estérification partielle, catalysée à l'aide d'une base, par réaction d'un acide polyacrylique avec un polyéther contenant un groupe hydroxyle libre pouvant réagir avec une fonction carboxylique dudit acide polyacrylique, de formule générale :

HO-(C₂H₄O)ₚ(C₃H₆O)_{q}-R₁

dans laquelle p est un nombre entier variant de 1 à 250, q est un nombre entier variant de 0 à 100 avec q < p, les groupes d'oxyde d'éthylène et d'oxyde de propylène étant distribués ou non de manière aléatoire, et R₁ représente un groupe alkyle de 1 à 12 atomes de carbone.

Dans le cadre du second mode de fabrication du dispersant autre formé des unités structurelles (3) et (4), le polyéther ou alkyléther de polyalkylène glycol, de formule générale HO-(C₂H₄O)ₚ (C₃H₆O)_{q}-R₁ est de préférence tel que :
- R₁ représente un groupe alkyle de 1 à 5 atomes de carbone, encore mieux, R₁ est un radical méthyle, éthyle, propyle ou butyle;
- q est égal à 0 et p est un nombre entier variant de 5 à 160, de préférence p est un nombre entier variant de 7 à 120.

Dans le cadre du second mode de fabrication du dispersant autre, l'acide polyacrylique est obtenu par polymérisation d'un mélange de monomères comprenant au moins 75 % en mole d'acide acrylique et au plus 25 % en mole d'un comonomère d'acide acrylique, de préférence encore par polymérisation de 100 % d'acide acrylique sans tenir compte des extrémités.

Pour la préparation du dispersant selon le second mode de fabrication du dispersant pour compositions aqueuses de sulfate de calcium anhydre, on pourra se reporter à la description détaillée du procédé donné dans le brevet français n° 2 776 285.

Ainsi, le dispersant selon l'invention peut être obtenu par divers procédés de fabrication connus en soi.

Les propriétés du dispersant ou de mélanges de dispersants sélectionné(s) dans le cadre de l'invention peuvent être mises à profit pour la réalisation de compositions aqueuses de sulfate de calcium anhydre ayant des propriétés hydrauliques pour revêtements horizontaux tels que, par exemple, les chapes de sol.

Les exemples non limitatifs ci-après illustrent la présente invention.

### Préparation des dispersants

Premier mode de préparation

Selon un premier mode de préparation, le dispersant de l'invention est préparé par copolymérisation :
- soit d'acide acrylique, commercialisé par la société SIGMA-ALDRICH.
- soit d'acide méthacrylique, commercialisé par la société SIGMA-ALDRICH.
- avec un acrylate ou un méthacrylate de méthyl polyéthylène glycol, de masse molaire moyenne en poids variable, commercialisé par la société SIGMA-ALDRICH.

### Second mode de préparation

Selon un second mode de préparation par estérification partielle, catalysée à l'aide d'une base, le dispersant de l'invention est obtenu en faisant réagir :
- soit un acide polyacrylique, de masse molaire moyenne en poids mesurée à 4000 g/mol (dalton), dilué à 50% dans l'eau, et commercialisé par la société BASF sous le nom commercial Sokalan CP 10S ;
- soit un acide polyméthacrylique, de masse molaire moyenne en poids mesurée à 4000 g/mol (daltons) par chromatographie d'exclusion stérique, dilué à 30% dans l'eau et obtenu par polymérisation de l'acide méthacrylique en présence d'acide thioglycolique catalysée par de l'eau oxygénée ;
- avec un polyéther contenant un groupe hydroxyle libre pouvant réagir avec une fonction carboxylique dudit acide carboxylique, de masse molaire moyenne en poids variable, commercialisés par la société SIGMA-ALDRICH.

Pour la préparation des dispersants selon ce second mode de préparation, on pourra se référer à la description détaillée du procédé donné dans le brevet français n° 2776285.

Dans la suite des exemples, le second mode de préparation du dispersant sera rappelé par le terme abrégé "estérification".

### Caractéristiques des dispersants testés dans les exemples.

Les caractéristiques de ces dispersants sont présentés dans le tableau suivant :

| référence du dispersant | Mode de préparation | Nature du polyacide | nombre moyen de motifs d'oxyde d'éthylène par chaîne polyéther | Pourcentage⁽²⁾ de fonctions ester dans le dispersant |
|---|---|---|---|---|
| PMS⁽¹⁾ | condensation | - | - | - |
| A | estérification | acide polyacrylique | 45 | 20 |
| B | estérification | acide polyacrylique | 25 | 40 |
| C | estérification | acide polyméthacrylique | 45 | 20 |
| D | estérification | acide polyméthacrylique | 25 | 40 |
| E | estérification | acide polyméthacrylique | 25 | 20 |
| F | estérification | acide polyméthacrylique | 25 | 30 |

| | | | | |
|---|---|---|---|---|
| (1) le dispersant PMS est une polymélamine sulfonée, obtenu par réaction de condensation d'une mélamine sulfonée avec du formol, et connu sous le nom commercial CHRYSO FLUID GT. (2) le pourcentage de fonction ester dans le dispersant est égal au rapport du nombre de fonctions ester sur la somme ramenée à 100 du nombre de fonctions ester et du nombre de fonction acide carboxylique, éventuellement salifiée. Ce pourcentage correspond selon le cas au rapport du nombre d'unités structurelles (2), sur le nombre total des unités structurelles (1) et (2), exprimé dans la présente demande, ou au rapport du nombre d'unités structurelles (4), sur le nombre total des unités structurelles (3) et (4). | | | | |

Les conditions d'évaluation des divers dispersants (de références PMS, A à F) permettant simultanément à leur action dispersante d'améliorer le maintien de la fluidité dans le temps et le contrôle des temps de début et/ou de fin de prise des compositions aqueuses de sulfate de calcium anhydre sont reportées ci-après.

### A/ Conditions des tests d'évaluation des dispersants utilisés dans une composition aqueuse de sulfate de calcium anhydre

Le sulfate de calcium anhydre utilisé, obtenu par déshydratation du gypse est commercialisé par la société LA CHAPE LIQUIDE (France).

Les dispersants sont utilisés en solution aqueuse contenant de 20% à 30% de matière active et sont évalués au travers de mesures de maintien de fluidité et de temps de début et de fin de prise dans un mortier préparé selon le mode de préparation suivant.

### A1. On décrit ci-après le mode de préparation d'un mortier de sulfate de calcium anhydre.

En premier lieu, on prépare un mortier comprenant :
- 700 kg/m³ de sulfate de calcium anhydre (kg/m³)
- 1200 kg/m³ de sable normalisé CEN (kg/m³)
- 300 kg/m³ d'eau (kg/m³)
- et X% en poids du dispersant sec rapporté à la quantité de sulfate de calcium anhydre.

La préparation du mortier décrit ci-dessus est réalisée conformément aux conditions établies dans la norme NF EN 196-1 et NF P 18-303.

### A2. Détermination de l'étalement.

Immédiatement après le gâchage, on remplit soigneusement à ras, en moins de 25 secondes, un moule tronconique préalablement centré sur une plaque de verre, avec le mortier préparé.

Il convient de noter que le moule tronconique, préalablement disposé sur la plaque de verre, présente les caractéristiques suivantes :
- hauteur du moule: 70mm +/- 0.1mm
- diamètre supérieur du moule: 55mm +/- 0.1mm
- diamètre inférieur du moule: 90mm +/- 0.1mm

Après 25 secondes, on retire lentement le moule et on mesure, en millimètre, à l'aide d'une règle graduée, la valeur d'étalement en réalisant la moyenne sur deux diamètres perpendiculaires représentatifs.

L'étalement est évalué en mesurant le diamètre de la galette de mortier formée sur la plaque de verre, suivant deux directions perpendiculaires, en fonction du temps (en minutes).

### A3. Détermination du temps de prise du mortier

Le temps de prise est déterminé par l'observation de la pénétration d'une aiguille normalisée dans le mortier jusqu'à une valeur spécifiée.

### Mode opératoire

On utilise un appareil ACMEL automatique composé d'un ensemble de moules de dimensions définies et d'une aiguille formée d'une tige cylindrique en métal poli, terminée à sa partie inférieure par une section droite de 1mm².
Il convient de noter que la masse totale des parties mobiles, constituées de la tige et de l'aiguille, est de 1 kg +/- 1 g.

Dans un premier temps, on remplit le moule de l'appareil avec le mortier préparé conformément au mode de préparation précité. Puis, on centre l'aiguille de l'appareil ACMEL au-dessus dudit moule.

Les conditions atmosphériques des essais doivent être de 23°C +/- 2°C pour la température et de 65% +/- 5% d'humidité relative.

Dès que le moule rempli (avec une surface parfaitement plane) est centré sous l'aiguille de l'appareil, l'aiguille est abaissée jusqu'au contact de la pâte. Un temps d'arrêt est marqué pour annuler tout effet de vitesse initiale, puis l'aiguille est lâchée.

Le temps de début de prise est le temps au bout duquel la distance entre l'aiguille et le repère supérieur est de 4 +/- 1mm.

Le temps de fin de prise est le temps au bout duquel la distance entre l'aiguille et le repère supérieur est stabilisé.

L'incertitude sur la détermination des temps de début et de fin de prise dans les conditions précitées est de l'ordre de 15 minutes.

Le temps de prise est défini comme étant la différence entre le temps de début de prise et le temps de fin de prise.

Les différents essais sont représentés ci-après.

### 1^{ère} série d'exemples montrant l'influence de la nature du « polyacide » du dispersant.

Les résultats obtenus sont regroupés dans le tableau qui suit :

| Référence du dispersant | % en poids d'extrait sec de dispersant | Etalement (mm) en fonction du temps | | | | | Début de prise (heures) | Fin de prise (heures) | Temps de prise (heures) |
|---|---|---|---|---|---|---|---|---|---|
| | | 0 mn | 30 mn | 60 mn | 120 mn | 180 mn | | | |
| PMS | 0,12 | 250 | 240 | 225 | 220 | 215 | 14:15 | 18:15 | 04:15 |
| A | 0,034 | 285 | 252 | 240 | - | - | 20:00 | - | - |
| C | 0,030 | 280 | 265 | 262 | 262 | 250 | 10:50 | 16:10 | 05:20 |

| | | | | | | | | | |
|---|---|---|---|---|---|---|---|---|---|
| L'abbréviation PMS signifie polymélamine sulfonée, il s'agit du dispersant commercialisé sous le nom commercial CHRYSO FLUID GT. PMS : Etat de la technique A : Etat de la technique C : Invention | | | | | | | | | |

Les résultats observés mettent en évidence un meilleur maintien de la fluidité dans le temps pour le mortier renfermant le dispersant C sélectionné selon l'invention par rapport à celui des mortiers renfermant les autres dispersants (dispersant A et dispersant de type PMS appartenant à l'état de la technique). On constate également que le temps de début de prise du mortier réalisé avec le dispersant A est beaucoup plus long que le temps de prise des mortiers réalisés à partir des autres dispersants.

Par conséquent, on constate un maintien de la fluidité dans le temps associé à un contrôle des temps de début et de fin de prise du mortier renfermant le dispersant C sélectionné, formé à partir d'acide polyméthacrylique par le second mode de préparation, par rapport aux mortiers renfermant soit un dispersant A obtenu à partir d'acide polyacrylique par le second mode de préparation, soit un dispersant de type polymélamine sulfonée.

A dosage en poids d'extrait sec de dispersant beaucoup plus faible que celui du dispersant de type polymélamine sulfonée, on constate une amélioration du maintien de la fluidité dans le temps du mortier renfermant le dispersant C sans observer une augmentation des temps de prise comme on peut l'observer pour le mortier renfermant le dispersant A.

### 2^{éme} série d'exemples avec des dispersants de longueurs de chaîne polyéther différentes.

Le dosage des dispersants en pourcentage d'extrait sec est égal à 0,030 % pour le dispersant C et est égal à 0,034 % pour le dispersant E.
Les résultats sont regroupés dans le tableau suivant :

| Référence du dispersant | (n) nombre moyen de motifs d'oxyde éthylène | Etalement (mm) en fonction du temps | | | | | Début de prise (heures) | Fin de prise (heures) | Temps de prise (heures) |
|---|---|---|---|---|---|---|---|---|---|
| | | 0 mn | 30 mn | 60 mn | 120 mn | 180 mn | | | |
| C invention | 45 | 280 | 265 | 262 | 262 | 250 | 10:50 | 16:10 | 05:20 |
| E invention | 25 | 279 | 268 | 266 | 264 | 261 | 13:05 | 18:05 | 05:00 |

Les résultats obtenus mettent en évidence des temps de prise pour les mortiers renfermant les dispersants sélectionnés C et E selon l'invention qui sont contrôlés et de même ordre de grandeur (environ 5 heures).
Les résultats obtenus montrent que l'augmentation du nombre moyen de motifs d'oxyde d'éthylène de la chaîne polyéther des dispersants testés a peu d'influence sur le maintien de la fluidité dans le temps et sur le temps de prise des mortiers de sulfate de calcium anhydre.

### Troisième série d'exemples montrant l'influence de la nature du « polyacide » du dispersant.

Le dosage des dispersants en pourcentage d'extrait sec est égal à 0,12 % pour le dispersant B à fort pourcentage en fonctions ester (40 %) et est respectivement égal à 0,034 % pour le dispersant E et égal à 0,040 % pour le dispersant F.
Les résultats sont regroupés dans le tableau qui suit :

| Référence du dispersant | Pourcentage de fonctions ester dans le dispersant | Etalement (mm) en fonction du temps | | | | | Début de prise (h) | Fin de prise (h) | Temps de prise (h) |
|---|---|---|---|---|---|---|---|---|---|
| | | 0 mn | 30 mn | 60 mn | 120 mn | 180 mn | | | |
| B | 40 | 275 | 290 | 290 | 280 | 270 | 30:00 | - | - |
| E | 20 | 279 | 268 | 266 | 264 | 261 | 13:05 | 18:05 | 05:00 |
| F | 30 | 280 | 270 | 266 | 260 | 260 | 14:30 | 19:15 | 04:45 |

| | | | | | | | | | |
|---|---|---|---|---|---|---|---|---|---|
| B : Etat de la technique E : Invention F : Invention | | | | | | | | | |

Les résultats obtenus mettent en évidence des temps de prise contrôlés et de même ordre de grandeur (environ 5 heures) pour les mortiers réalisés à partir des dispersants E ou F sélectionnés selon l'invention.
L'augmentation du pourcentage de fonctions ester dans le dispersant n'a pas un effet significatif sur le maintien de la fluidité dans le temps du mortier.

On constate une influence des dispersants sélectionnés formés à partir d'acide polyméthacrylique sur les temps de prise de mortiers par rapport aux dispersants obtenus à partir d'acide polyacrylique. L'utilisation des dispersants E et F dans le mortier permettent d'obtenir des temps de prise limités.

Par conséquent, les résultats mettent en évidence un comportement positif des dispersants sélectionnés formés à partir d'acide polyméthacrylique (c'est-à-dire un bon maintien de la fluidité dans le temps associé à des temps de début et/ou de fin de prise contrôlés) par rapport au dispersant formé à partir d'acide polyacrylique.

### 4^{ème} série d'exemples avec des mélanges de différents dispersants.

Le mélange 1 consiste en un mélange de deux dispersants sélectionnés C et D. Ledit mélange 1, ramené à 100 % en poids des dispersants exprimé en sec, comprenant 80 % en poids exprimé en sec de dispersant C et 20 % en poids exprimé en sec de dispersant D.
Le mélange 2 consiste en un mélange de deux dispersants C et B, le dispersant C étant sélectionné selon l'invention. Ledit mélange 2, ramené à 100 % en poids des dispersants exprimé en sec, comprenant 75 % en poids exprimé en sec de dispersant C et 25 % en poids exprimé en sec de dispersant B.

Les résultats sont reportés dans le tableau qui suit :

| Référence du dispersant | % en poids d'extrait sec de dispersant | Etalement (mm) en fonction du temps | | | | | Début de prise (heures) | Fin de prise (heures) | Temps de prise (heures) |
|---|---|---|---|---|---|---|---|---|---|
| | | 0 mn | 30 mn | 60 mn | 12 0 mn | 180 mn | | | |
| PMS | 0,12 | 250 | 240 | 225 | 220 | 215 | 14 :15 | 18 :15 | 04 :15 |
| B | 0,12 | 275 | 290 | 290 | 280 | 270 | 30:00 | - | - |
| C | 0,030 | 280 | 265 | 262 | 262 | 250 | 10:50 | 16:10 | 05:20 |
| D | 0,12 | 220 | - | - | - | - | 14:45 | 20:00 | 05:15 |
| Mélange 1 (C + D) | 0,034 | 266 | 256 | 256 | 256 | 256 | 13 :30 | 15 :15 | 01 :45 |
| Mélange 2 (C + B) | 0,032 | 264 | 250 | 251 | 245 | 245 | 13:25 | 16:30 | 03:05 |

Les résultats obtenus mettent en évidence un meilleur maintien de la fluidité dans le temps des mortiers renfermant les mélanges 1 et 2 de dispersants, associé à de meilleurs temps de prise contrôlés par rapport à un mortier renfermant un dispersant à base de polymélamine sulfonée.

Par ailleurs, on constate que dans certaines conditions des mortiers renfermant un mélange de dispersants (mélange 1 ou mélange 2) peuvent se révéler plus performants pour un bon maintien de la fluidité dans le temps associé à des temps de prise contrôlés que des mortiers renfermant un seul dispersant comme, par exemple, le dispersant B ou D.

Les résultats obtenus mettent en évidence un comportement positif (i.e. un bon maintien de la fluidité dans le temps associé à un contrôle du temps de prise) des mortiers de compositions de sulfate de calcium anhydre renfermant un mélange de dispersants tels que définis dans le cadre de l'invention.

## Revendications

1. Utilisation d'un dispersant de type polycarboxylique sélectionné parmi les dispersants de ce type pour des compositions aqueuses de sulfate de calcium anhydre ayant des propriétés hydrauliques, dans lesquelles ledit sulfate de calcium représente au moins 80% en poids du liant hydraulique total, ledit dispersant permettant simultanément à son action dispersante d'améliorer le maintien de la fluidité dans le temps et de contrôler les temps de début et/ou de fin de prise, ce dispersant sélectionné comprenant au moins 75 % en nombre d'un enchaînement linéaire aléatoire d'unités structurelles (1) et (2) représentées par les formules suivantes : 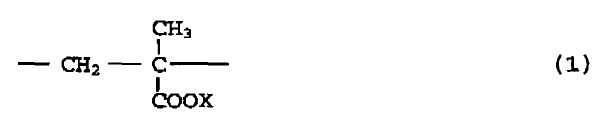 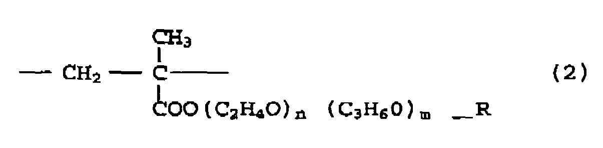 dans lesquelles X représente un atome d'hydrogène, un métal alcalin, un métal alcalino-terreux ou un ammonium, lesdites unités structurelles (1) pouvant être identiques ou différentes; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes; le rapport du nombre d'unités structurelles (2), sur le nombre total des unités structurelles (1) et (2), étant compris entre 5 % et 60 %.

2. Utilisation selon la revendication 1, **caractérisée en ce que** le dispersant sélectionné comprend 100 % en nombre d'unités structurelles (1) et (2), en ne prenant pas en compte les unités de terminaison de chaîne.

3. Utilisation selon la revendication 1 ou 2, **caractérisée en ce que** m est égal à zéro et n varie de 5 à 160.

4. Utilisation selon la revendication 1 ou 2, **caractérisée en ce que** R est un groupe alkyle de 1 à 5 atomes de carbone, préférentiellement R est un radical méthyle, éthyle, propyle ou butyle.

5. Utilisation selon la revendication 2, **caractérisée en ce que** m est égal à zéro, n varie de 7 à 120, le rapport du nombre d'unités structurelles (2), qui correspondent à des esters des unités structurelles (1), sur le nombre total des unités structurelles (1) et (2), est compris entre 15 % et 40 %.

6. Utilisation selon la revendication 1 ou 2, **caractérisée en ce que** le dispersant sélectionné est constitué d'un mélange d'agents dispersants sélectionnés définis dans l'une des revendications 1 à 5.

7. Utilisation d'un mélange de dispersants pour compositions aqueuses de sulfate de calcium anhydre représentant au moins 80% en poids du liant hydraulique total, mélange de dispersants permettant simultanément à son action dispersante d'améliorer le maintien de la fluidité dans le temps et de contrôler les temps de début et/ou de fin de prise, ledit mélange, ramené à 100 % en poids des dispersants exprimé en sec, comprenant :
- de 50 à 90 % en poids exprimé en sec d'un dispersant sélectionné parmi les dispersants polycarboxyliques comprenant au moins 75 % en nombre d'un enchaînement linéaire aléatoire d'unités structurelles (1) et (2), et
- de 10 à 50 % en poids exprimé en sec d'un autre dispersant polycarboxylique comprenant au moins 75 % en nombre d'un enchaînement linéaire aléatoire d'unités structurelles (3) et (4),
les unités structurelles (1), (2), (3) et (4) étant représentées par les formules suivantes : 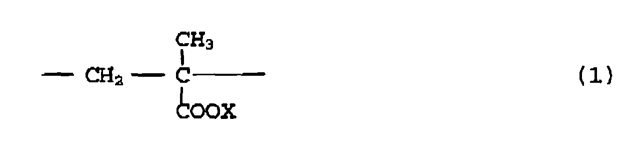 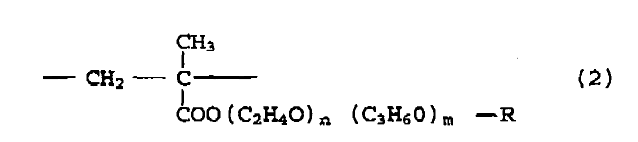 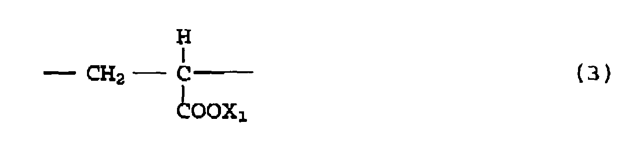 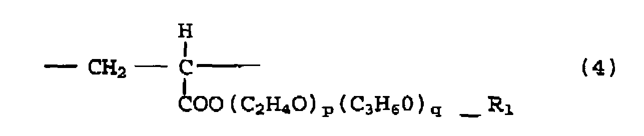 dans lesquelles X et X₁, identiques ou différents, représentent un atome d'hydrogène, un métal alcalin, un métal alcalino-terreux ou un ammonium, les unités structurelles (1) pouvant être identiques ou différentes et les unités structurelles (3) pouvant être identiques ou différentes; n et p, de valeurs identiques ou différentes, sont des nombres entiers variant de 1 à 250, m et q, de valeurs identiques ou différentes, sont des nombres entiers variant de 0 à 100 avec m < n et q < p, les groupes d'oxyde de propylène pouvant être distribués ou non de façon aléatoire parmi les groupes d'oxyde d'éthylène ; R et R₁, identiques ou différents, représentent un groupe alkyle de 1 à 12 atomes de carbone, les unités structurelles (2) pouvant être identiques ou différentes et les unités structurelles (4) pouvant être identiques ou différentes.

8. Utilisation selon la revendication 1 ou 2, **caractérisée en ce que** la quantité de dispersant additionnée à la composition aqueuse de sulfate de calcium anhydre est comprise entre 0,01 % et 0,5 % en poids en sec rapporté au poids de sulfate de calcium anhydre.

9. Utilisation selon la revendication 7, **caractérisée en ce que** la quantité du mélange de dispersants additionnée à la composition aqueuse de sulfate de calcium anhydre est comprise entre 0,01 % et 0,5 % en poids en sec rapporté au poids de sulfate de calcium anhydre.

10. Utilisation selon la revendication 1 ou 2, **caractérisée en ce que** le rapport du nombre d'unités structurelles (2), qui correspondent à des esters des unités structurelles (1), sur le nombre total des unités structurelles (1) et (2), est compris entre 5 % et 50 %.

11. Utilisation selon la revendication 7, **caractérisée en ce que** R et R₁, identiques ou différents, sont des groupes alkyles de 1 à 5 atomes de carbone, préférentiellement R et R₁, identiques ou différents, sont un radical méthyle, éthyle, propyle ou butyle.

12. Utilisation selon la revendication 1 ou 7, **caractérisée en ce que** le dispersant sélectionné formé des unités structurelles (1) et (2) est obtenu par copolymérisation d'un monomère (a), représenté par la formule (A) suivante, avec au moins un monomère (b), sélectionné parmi les composés représentés par la formule (B) suivante: 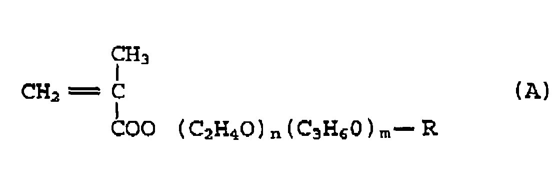 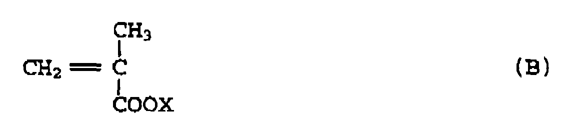 dans lesquelles X représente un atome d'hydrogène, un métal alcalin, un métal alcalino-terreux ou un ammonium; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène ; R représente un groupe alkyle de 1 à 12 atomes de carbone.

13. Utilisation selon la revendication 7, **caractérisée en ce que** le dispersant formé des unités structurelles (3) et (4) est obtenu par copolymérisation d'un monomère (a'), représenté par la formule (A') suivante, avec au moins un monomère (b'), sélectionné parmi les composés représentés par la formule (B') suivante: 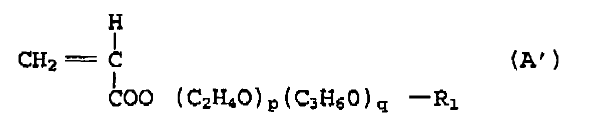 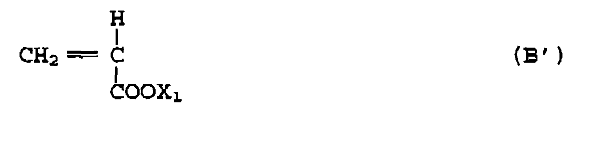 dans lesquelles X₁ représente un atome d'hydrogène, un métal alcalin, un métal alcalino-terreux ou un ammonium; p est un nombre entier variant de 1 à 250, q est un nombre entier variant de 0 à 100 avec q < p, les groupes d'oxyde de propylène pouvant être distribués ou non de façon aléatoire parmi les groupes d'oxyde d'éthylène ; R₁ représente un groupe alkyle de 1 à 12 atomes de carbone.

14. Utilisation selon la revendication 1 ou 7, **caractérisée en ce que** le dispersant sélectionné formé des unités structurelles (1) et (2) est obtenu par réaction d'estérification partielle d'un acide polyméthacrylique avec un polyéther contenant un groupe hydroxyle libre pouvant réagir avec une fonction carboxylique dudit acide polyméthacrylique, de formule générale
HO-(C₂H₄O)ₙ(C₃H₆O)ₘ-R
dans laquelle n est un nombre entier variant de 1 à 250, m est un nombre entier variant de 0 à 100 avec m < n, les groupes d'oxyde d'éthylène et d'oxyde de propylène étant distribués de manière aléatoire, et R représente un groupe alkyle de 1 à 12 atomes de carbone.

15. Utilisation selon la revendication 7, **caractérisée en ce que** le dispersant sélectionné formé des unités structurelles (3) et (4) est obtenu par réaction d'estérification partielle d'un acide polyacrylique avec un polyéther contenant un groupe hydroxyle libre pouvant réagir avec une fonction carboxylique dudit acide polyméthacrylique, de formule générale
HO-(C₂H₄O)ₚ(C₃H₆O)_{q}-R₁
dans laquelle p est un nombre entier variant de 1 à 250, q est un nombre entier variant de 0 à 100 avec q < p, les groupes d'oxyde d'éthylène et d'oxyde de propylène étant distribués de manière aléatoire, et R₁ représente un groupe alkyle de 1 à 12 atomes de carbone.

16. Utilisation selon la revendication 14, **caractérisée en ce que** l'acide polyméthacrylique est obtenu par polymérisation d'un mélange de monomères comprenant au moins 75 % en mole d'acide méthacrylique et au plus 25 % en mole d'un comonomère de l'acide méthacrylique.

17. Utilisation selon la revendication 14, **caractérisée en ce que** l'acide polyméthacrylique est obtenu par polymérisation d'acide méthacrylique.

18. Composition aqueuse de sulfate de calcium anhydre comprenant en outre un dispersant de type polycarboxylique **caractérisée en ce que** le dispersant sélectionné est un dispersant qui permet d'améliorer le maintien de la fluidité dans le temps et de contrôler les temps de début et/ou de fin de prise de compositions aqueuses de sulfate de calcium anhydre
dans lesquelles ledit sulfate de calcium représente au moins 80% en poids du liant hydraulique total, ledit dispersant comprenant 75 % en nombre d'un enchaînement linéaire aléatoire d'unités structurelles (1) et (2) représentées par les formules suivantes : 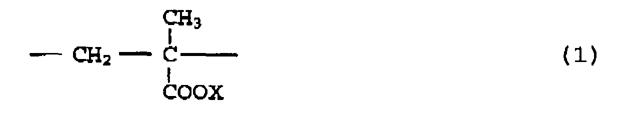 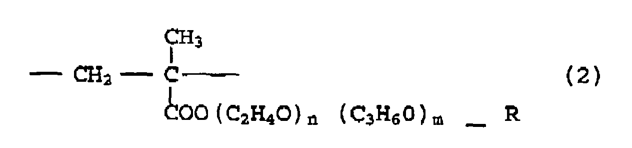 dans lesquelles X représente un atome d'hydrogène, un métal alcalin, un métal alcalino-terreux ou un ammonium, lesdites unités structurelles (1) pouvant être identiques ou différentes; n est un nombre entier variant de 1 à 250, m est un nombre entier variant de 0 à 100 avec m < n, les groupes d'oxyde de propylène pouvant être distribués ou non de façon aléatoire parmi les groupes d'oxyde d'éthylène, R représente un groupe alkyle de 1 à 12 atomes de carbone, lesdites unités structurelles (2) pouvant être identiques ou différentes; le rapport du nombre d'unités structurelles (2), sur le nombre total des unités structurelles (1) et (2), étant compris entre 5 % et 60 %.

19. Composition aqueuse de sulfate de calcium anhydre comprenant en outre un mélange de dispersants de type polycarboxylique **caractérisé en ce que** le mélange de dispersants est un mélange de dispersants qui permet d'améliorer le maintien de la fluidité dans le temps et de contrôler les temps de début et/ou de fin de prise de compositions aqueuses de sulfate de calcium anhydre, dans lesquelles ledit sulfate de calcium représente au moins 80% en poids du liant hydraulique total, ledit mélange, ramené à 100 % en poids des dispersants exprimé en sec, comprenant :
- de 50 à 90 % en poids exprimé en sec d'un dispersant sélectionné comprenant au moins 75 % en nombre d'un enchaînement linéaire aléatoire d'unités structurelles (1) et (2), et
- de 10 à 50 % en poids exprimé en sec d'un autre dispersant comprenant au moins 75 % en nombre d'un enchaînement linéaire aléatoire d'unités structurelles (3) et (4),
les unités structurelles (1), (2), (3) et (4) étant représentées par les formules suivantes : 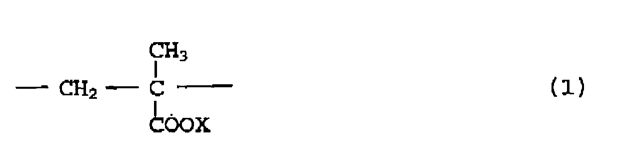 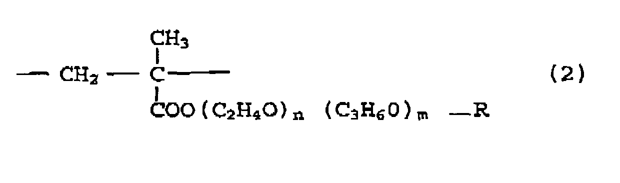 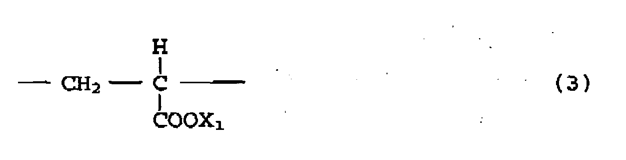 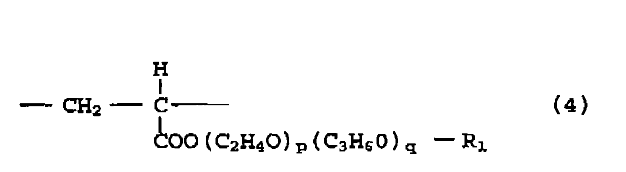 dans lesquelles X et X₁ identiques ou différents représentent un atome d'hydrogène, un métal alcalin, un métal alcalino-terreux ou un ammonium, les unités structurelles (1) pouvant être identiques ou différentes et les unités structurelles (3) pouvant être identiques ou différentes; n et p, de valeurs identiques ou différentes, sont des nombres entiers variant de 1 à 250, m et q, de valeurs identiques ou différentes, sont des nombres entiers variant de 0 à 100 avec m < n et q < p, les groupes d'oxyde de propylène pouvant être distribués ou non de façon aléatoire parmi les groupes d'oxyde d'éthylène ; R et R₁, identiques ou différents, représentent un groupe alkyle de 1 à 12 atomes de carbone, les unités structurelles (2) pouvant être identiques ou différentes et les unités structurelles (4) pouvant être identiques ou différentes.

## Claims

1. Use of a dispersant of polycarboxylic type selected from dispersants of this type for aqueous anhydrous calcium sulfate compositions with hydraulic properties, in which the said calcium sulfate represents at least 80% by weight of the total hydraulic binder, the said dispersant making it possible, simultaneously with its dispersing action, to improve maintenance of the fluidity over time and to control the times of start and/or end of setting, this selected dispersant comprising at least 75% by number of a random linear chain of structural units (1) and (2) represented by the following formulae: 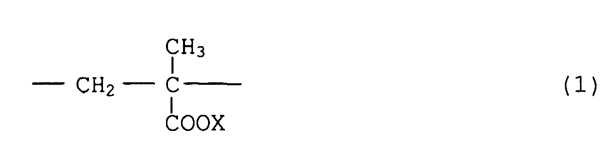 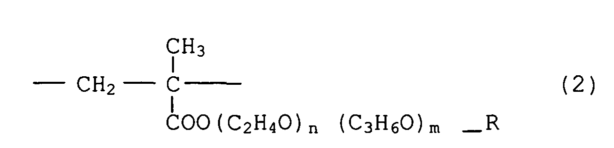 in which X represents a hydrogen atom, an alkali metal, an alkaline-earth metal or an ammonium, the said structural units (1) possibly being identical or different; n is an integer ranging from 1 to 250, m is an integer ranging from 0 to 100 with m < n, the propylene oxide groups possibly being randomly distributed among the ethylene oxide groups, R represents an alkyl group of 1 to 12 carbon atoms, the said structural units (2) possibly being identical or different; the ratio of the number of structural units (2) to the total number of structural units (1) and (2) being between 5% and 60%.

2. Use according to Claim 1, **characterized in that** the selected dispersant comprises 100% by number of structural units (1) and (2), not taking into account the chain-terminating units.

3. Use according to Claim 1 or 2, **characterized in that** m is equal to zero and n ranges from 5 to 160.

4. Use according to Claim 1 or 2, **characterized in that** R is an alkyl group of 1 to 5 carbon atoms and is preferentially a methyl, ethyl, propyl or butyl radical.

5. Use according to Claim 2, **characterized in that** m is equal to zero, n ranges from 7 to 120, the ratio of the number of structural units (2), which corresponds to esters of structural units (1), to the total number of structural units (1) and (2) is between 15% and 40%.

6. Use according to Claim 1 or 2, **characterized in that** the selected dispersant consists of a mixture of selected dispersants defined in one of Claims 1 to 5.

7. Use of a mixture of dispersants for aqueous anhydrous calcium sulfate compositions representing at least 80% by weight of the total hydraulic binder, the mixture of dispersants making it possible, simultaneously with its dispersing action, to improve maintenance of the fluidity over time and to control the times of start and/or end of setting, the said mixture, relative to 100% by weight of the dispersants expressed as solids, comprising:
- from 50% to 90% by weight, expressed as solids, of a dispersant selected from polycarboxylic dispersants comprising at least 75% by number of a random linear chain of structural units (1) and (2), and
- from 10% to 50% by weight, expressed as solids, of another polycarboxylic dispersant comprising at least 75% by number of a random linear chain of structural units (3) and (4),
the structural units (1), (2), (3) and (4) being represented by the following formulae: 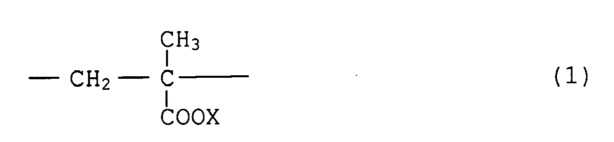 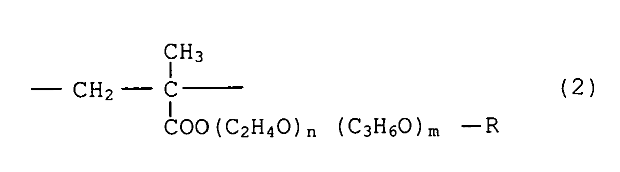 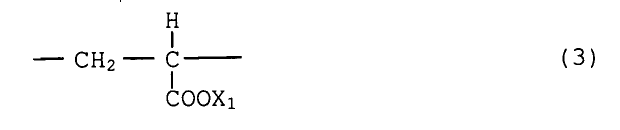 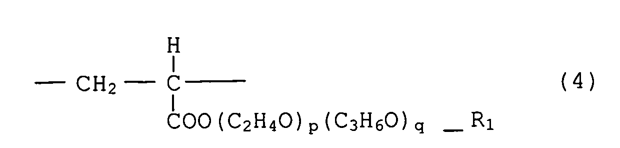 in which X and X₁, which may be identical or different, represent a hydrogen atom, an alkali metal, an alkaline-earth metal or an ammonium, the structural units (1) possibly being identical or different and the structural units (3) possibly being identical or different; n and p, which may have identical or different values, are integers ranging from 1 to 250, m and q, which may have identical or different values, are integers ranging from 0 to 100 with m < n and q < p, the propylene oxide groups possibly being randomly distributed among the ethylene oxide groups; R and R₁, which may be identical or different, represent an alkyl group of 1 to 12 carbon atoms, the structural units (2) possibly being identical or different and the structural units (4) possibly being identical or different.

8. Use according to Claim 1 or 2, **characterized in that** the amount of dispersant added to the aqueous anhydrous calcium sulfate composition is between 0.01% and 0.5% by dry weight relative to the weight of anhydrous calcium sulfate.

9. Use according to Claim 7, **characterized in that** the amount of the mixture of dispersants added to the aqueous anhydrous calcium sulfate composition is between 0.01% and 0.5% by dry weight relative to the weight of anhydrous calcium sulfate.

10. Use according to Claim 1 or 2, **characterized in that** the ratio of the number of structural units (2), which correspond to esters of the structural units (1), relative to the total number of structural units (1) and (2), is between 5% and 50%.

11. Use according to Claim 7, **characterized in that** R and R₁, which may be identical or different, are alkyl groups of 1 to 5 carbon atoms and are preferentially a methyl, ethyl, propyl or butyl radical.

12. Use according to Claim 1 or 7, **characterized in that** the selected dispersant formed from the structural units (1) and (2) is obtained by copolymerization of a monomer (a), represented by formula (A) below, with at least one monomer (b), selected from the compounds represented by formula (B) below: 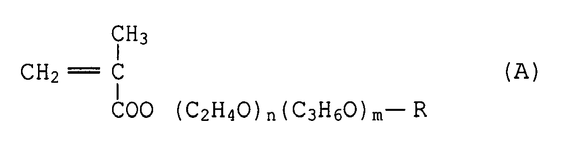 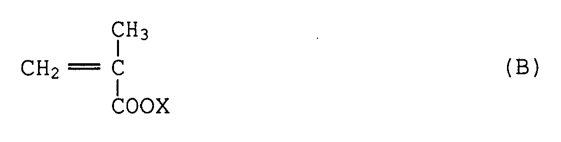 in which X represents a hydrogen atom, an alkali metal, an alkaline-earth metal or an ammonium; n is an integer ranging from 1 to 250, m is an integer ranging from 0 to 100 with m < n, the propylene oxide groups possibly being randomly distributed among the ethylene oxide groups; R represents an alkyl group of 1 to 12 carbon atoms.

13. Use according to Claim 7, **characterized in that** the dispersant formed from the structural units (3) and (4) is obtained by copolymerization of a monomer (a'), represented by formula (A') below, with at least one monomer (b'), selected from the compounds represented by formula (B') below: 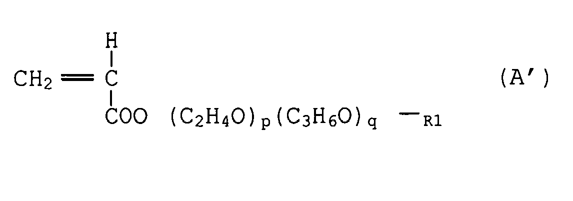 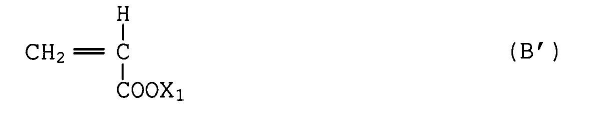 in which X₁ represents a hydrogen atom, an alkali metal, an alkaline-earth metal or an ammonium; p is an integer ranging from 1 to 250, q is an integer ranging from 0 to 100 with q < p, the propylene oxide groups possibly being randomly distributed among the ethylene oxide groups; R₁ represents an alkyl group of 1 to 12 carbon atoms.

14. Use according to Claim 1 or 7, **characterized in that** the selected dispersant formed from the structural units (1) and (2) is obtained by partial esterification reaction of a polymethacrylic acid with a polyether containing a free hydroxyl group that can react with a carboxylic function of the said polymethacrylic acid, of general formula
HO-(C₂H₄O)ₙ(C₃H₆O) ₘ-R
in which n is an integer ranging from 1 to 250, m is an integer ranging from 0 to 100 with m < n, the ethylene oxide and propylene oxide groups being randomly distributed, and R represents an alkyl group of 1 to 12 carbon atoms.

15. Use according to Claim 7, **characterized in that** the selected dispersant formed from the structural units (3) and (4) is obtained by partial esterification reaction of a polyacrylic acid with a polyether containing a free hydroxyl group that can react with a carboxylic function of the said polymethacrylic acid, of general formula
HO-(C₂H₄O)ₚ(C₃H₆O)_{q}-R₁
in which p is an integer ranging from 1 to 250, q is an integer ranging from 0 to 100 with q < p, the ethylene oxide and propylene oxide groups being randomly distributed, and R₁ represents an alkyl group of 1 to 12 carbon atoms.

16. Use according to Claim 14, **characterized in that** the polymethacrylic acid is obtained by polymerization of a mixture of monomers comprising at least 75 mol% of methacrylic acid and not more than 25 mol% of a methacrylic acid comonomer.

17. Use according to Claim 14, **characterized in that** the polymethacrylic acid is obtained by polymerization of methacrylic acid.

18. Aqueous anhydrous calcium sulfate composition also comprising a dispersant of polycarboxylic type, **characterized in that** the selected dispersant is a dispersant that makes it possible to improve maintenance of fluidity over time and to control the times of start and/or end of setting of aqueous anhydrous calcium sulfate compositions, in which the said calcium sulfate represents at least 80% by weight of the total hydraulic binder, the said dispersant comprising 75% by number of a random linear chain of structural units (1) and (2) represented by the following formulae: 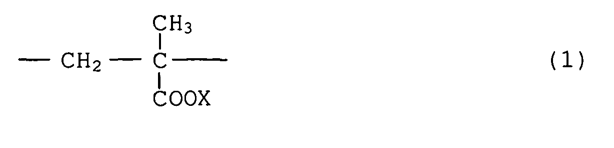 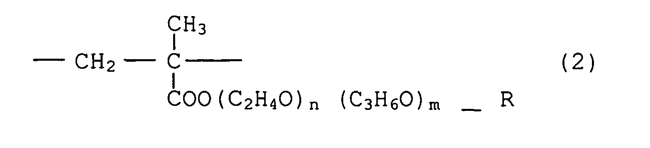 in which X represents a hydrogen atom, an alkali metal, an alkaline-earth metal or an ammonium, the said structural units (1) possibly being identical or different; n is an integer ranging from 1 to 250, m is an integer ranging from 0 to 100 with m < n, the propylene oxide groups possibly being randomly distributed among the ethylene oxide groups, R represents an alkyl group of 1 to 12 carbon atoms, the said structural units (2) possibly being identical or different; the ratio of the number of structural units (2) to the total number of structural units (1) and (2) being between 5% and 60%.

19. Aqueous anhydrous calcium sulfate composition also comprising a mixture of dispersants of polycarboxylic type, **characterized in that** the mixture of dispersants is a mixture of dispersants that makes it possible to improve maintenance of the fluidity over time and to control the times of start and/or end of setting of aqueous anhydrous calcium sulfate compositions, in which the said calcium sulfate represents at least 80% of the weight of the total hydraulic binder, the said mixture, relative to 100% by weight of the dispersants expressed as solids, comprising:
- from 50% to 90% by weight, expressed as solids, of a selected dispersant comprising at least 75% by number of a random linear chain of structural units (1) and (2), and
- from 10% to 50% by weight, expressed as solids, of another dispersant comprising at least 75% by number of a random linear chain of structural units (3) and (4),
the structural units (1), (2), (3) and (4) being represented by the following formulae: 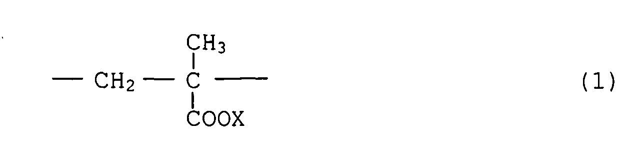 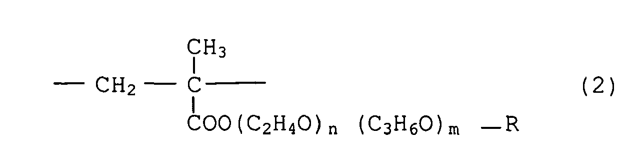 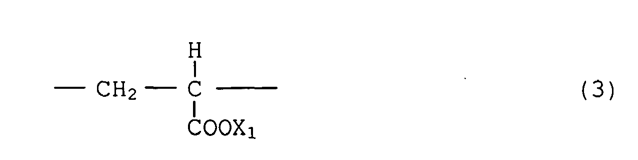 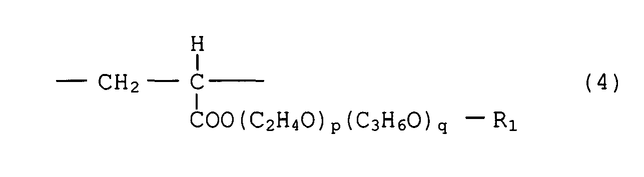 in which X and X₁, which may be identical or different, represent a hydrogen atom, an alkali metal, an alkaline-earth metal or an ammonium, the structural units (1) possibly being identical or different and the structural units (3) possibly being identical or different; n and p, which may have identical or different values, are integers ranging from 1 to 250, m and q, which may have identical or different values, are integers ranging from 0 to 100 with m < n and q < p, the propylene oxide groups possibly being randomly distributed among the ethylene oxide groups; R and R₁, which may be identical or different, represent an alkyl group of 1 to 12 carbon atoms, the structural units (2) possibly being identical or different and the structural units (4) possibly being identical or different.

## Patentansprüche

1. Verwendung eines Dispergiermittels vom Polycarboxyl-Typ, ausgewählt aus Dispergiermitteln dieses Typs für wässrige Zusammensetzungen von wasserfreiem Calciumsulfat, das hydraulische Eigenschaften aufweist, in denen das genannte Calciumsulfat mindestens 80 Gew.-% des gesamten hydraulischen Bindemittels ausmacht, wobei das genannte Dispergiermittel gleichzeitig mit seiner dispergierenden Wirkung die Verbesserung der Aufrechterhaltung der Fließfähigkeit (Fluidität) in der Zeiteinheit und die Kontrolle (Steuerung) des Beginns und/oder des Endes des Abbindens erlaubt, wobei dieses ausgewählte Dispergiermittel umfasst mindestens 75 %, bezogen auf die Anzahl, Struktureinheiten (1) und (2) mit einer statistischen linearen Kettenverknüpfung, dargestellt durch die folgenden Formeln: 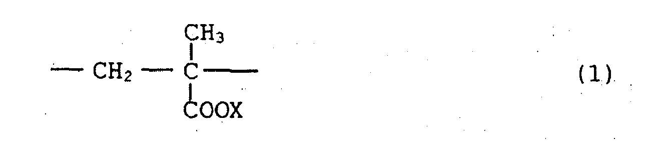 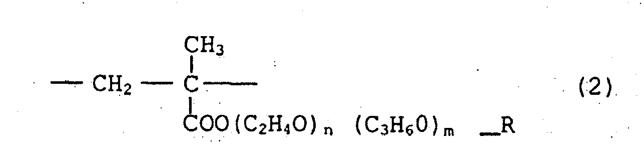 worin:
X steht für ein Wasserstoffatom, für ein Alkalimetallatom, ein Erdalkalimetallatom oder für eine Ammonium-Gruppe, wobei die genannten Struktureinheiten (1) gleich oder verschieden sein können;
n steht für eine ganze Zahl, die von 1 bis 250 variiert,
m steht für eine ganze Zahl, die von 0 bis 100 variiert, wobei m < n, wobei die Propylenoxidgruppen statistisch oder nicht-statistisch zwischen den Ethylenoxidgruppen verteilt sein können,
R steht für eine Alkylgruppe mit 1 bis 12 Kohlenstoffatomen, wobei die genannten Struktureinheiten (2) gleich oder verschieden sein können;
wobei das Verhältnis zwischen der Anzahl der Struktureinheiten (2) und der Gesamtanzahl der Struktureinheiten (1) + (2), zwischen 5 % und 60 % liegt.

2. Verwendung nach Anspruch 1, **dadurch gekennzeichnet, dass** das ausgewählte Dispergiermittel umfasst 100 %, bezogen auf die Anzahl, Struktureinheiten (1) und (2), wobei die Anzahl der Kettenabschluss-Einheiten nicht berücksichtigt ist.

3. Verwendung nach Anspruch 1 oder 2, **dadurch gekennzeichnet, dass** m für die Zahl Null steht und n von 5 bis 160 variiert.

4. Verwendung nach Anspruch 1 oder 2, **dadurch gekennzeichnet, dass** R für eine Alkylgruppe mit 1 bis 5 Kohlenstoffatomen, vorzugsweise für einen Methyl-, Ethyl-, Propyl- oder Butyl-Rest steht.

5. Verwendung nach Anspruch 2, **dadurch gekennzeichnet, dass** m für die Zahl Null steht, n von 7 bis 120 variiert, und das Verhältnis zwischen der Anzahl der Struktureinheiten (2), die Estern der Struktureinheiten (1) entsprechen, und der Gesamtanzahl der Struktureinheiten (1) + (2) zwischen 15 % und 40 % liegt.

6. Verwendung nach Anspruch 1 oder 2, **dadurch gekennzeichnet, dass** das ausgewählte Dispergiermittel besteht aus einer Mischung von ausgewählten Dispergiermitteln, wie sie in einem der Ansprüche 1 bis 5 definiert sind.

7. Verwendung einer Mischung von Dispergiermitteln für wässrige Zusammensetzungen von wasserfreiem Calciumsulfat, das mindestens 80 Gew.-% des gesamten hydraulischen Bindemittels darstellt, wobei die Mischung von Dispergiermitteln gleichzeitig mit ihrer dispergierenden Wirkung die Verbesserung der Aufrechterhaltung der Fließfähigkeit (Fluidität) in der Zeiteinheit und die Kontrolle (Steuerung) des Beginns und/oder des Endes des Abbindens erlaubt, wobei die genannte Mischung, bezogen auf 100 Gew.-% der Dispergiermittel, ausgedrückt als Trockengewicht, umfasst:
- 50 bis 90 Gew.-%, ausgedrückt als Trockengewicht, eines Dispergiermittels, ausgewählt unter den Polycarboxyl-Dispergiermitteln, das umfasst mindestens 75 %, bezogen auf die Anzahl, Struktureinheiten (1) und (2) mit einer statistischen linearen Kettenverknüpfung und
- 10 bis 50 Gew.-%, ausgedrückt als Trockengewicht, eines anderen Polycarboxyl-Dispergiermittels, das mindestens 75 %, bezogen auf die Anzahl, Struktureinheiten (3) und (4) mit einer statistischen linearen Kettenverknüpfung umfasst,
wobei die Struktureinheiten (1), (2), (3) und (4) dargestellt sind durch die folgenden Formeln: 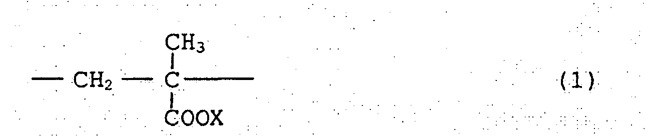 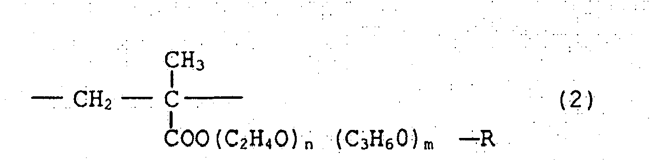 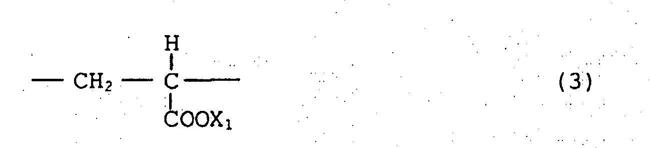 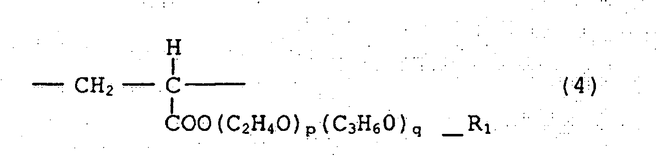 worin:
X und X₁, die gleich oder verschieden sind, stehen für ein Wasserstoffatom, ein Alkalimetallatom, ein Erdalkalimetallatom oder eine Ammonium-gruppe, wobei die Struktureinheiten (1) gleich oder verschieden sein können und die Struktureinheiten (3) gleich oder verschieden sein können;
n und p, die gleiche oder verschiedene Werte haben, stehen für ganze Zahlen, die von 1 bis 250 variieren,
m und q, die gleiche oder verschiedene Werte haben, stehen für ganze Zahlen, die von 0 bis 100 variieren, wobei m < n und q < p, wobei die Propylenoxid-Gruppen zwischen den Ethylenoxidgruppen auf statistische oder nicht-statistische Weise verteilt sein können; und
R und R₁, die gleich oder verschieden sind, stehen für eine Alkylgruppe mit 1 bis 12 Kohlenstoffatomen, wobei die Struktureinheiten (2) gleich oder verschieden sein können und die Struktureinheiten (4) gleich oder verschieden sein können.

8. Verwendung nach Anspruch 1 oder 2, **dadurch gekennzeichnet, dass** die Menge des der wässrigen Zusammensetzung von wasserfreiem Calciumsulfat zugesetzten Dispergiermittels zwischen 0,01 und 0,5 Gew.-%, als Trockengewicht, liegt, bezogen auf das Gewicht des wasserfreien Calciumsulfats.

9. Verwendung nach Anspruch 7, **dadurch gekennzeichnet, dass** die Menge der der wässrigen Zusammensetzung von wasserfreiem Calciumsulfat zugesetzten Mischung von Dispergiermitteln zwischen 0,01 und 0,5 Gew.-%, als Trockengewicht, liegt, bezogen auf das Gewicht des wasserfreien Calciumsulfats.

10. Verwendung nach Anspruch 1 oder 2, **dadurch gekennzeichnet, dass** das Verhältnis zwischen der Anzahl der Struktureinheiten (2), die Estern der Struktureinheiten (1) entsprechen, und der Gesamtanzahl der Struktureinheiten (1) + (2) zwischen 5 % und 50 % liegt.

11. Verwendung nach Anspruch 7, **dadurch gekennzeichnet, dass** R und R₁, die gleich oder verschieden sind, für Alkylgruppen mit 1 bis 5 Kohlenstoffatomen stehen und vorzugsweise R und R₁, die gleich oder verschieden sind, für einen Methyl-, Ethyl-, Propyl- oder Butyl-Rest stehen.

12. Verwendung nach Anspruch 1 oder 7, **dadurch gekennzeichnet, dass** das ausgewählte Dispergiermittel, das aus Struktureinheiten (1) und (2) aufgebaut ist, erhältlich ist durch Copolymerisation eines Monomers (a), dargestellt durch die folgende Formel (A), mit mindestens einem Monomer (b), ausgewählt unter den Verbindungen der folgenden Formel (B): 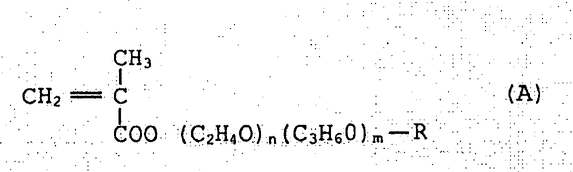 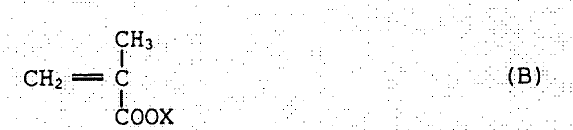 worin:
X steht für ein Wasserstoffatom, ein Alkalimetallatom, ein Erdalkalimetallatom oder eine Ammoniumgruppe;
n steht für eine ganze Zahl, die von 1 bis 250 variiert,
m steht für eine ganze Zahl, die von 0 bis 100 variiert, wobei m < n, wobei die Propylenoxid-Gruppen zwischen den Ethylenoxid-Gruppen statistisch oder nicht-statistisch verteilt sein können; und
R steht für eine Alkylgruppe mit 1 bis 12 Kohlenstoffatomen.

13. Verwendung nach Anspruch 7, **dadurch gekennzeichnet, dass** das Dispergiermittel, das aus Struktureinheiten (3) und (4) aufgebaut ist, erhältlich ist durch Copolymerisation eines Monomers (a'), dargestellt durch die folgende Formel (A'), mit mindestens einem Monomer (b'), ausgewählt unter den Verbindungen, die durch die nachstehende Formel (B') dargestellt werden: 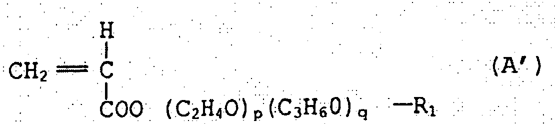 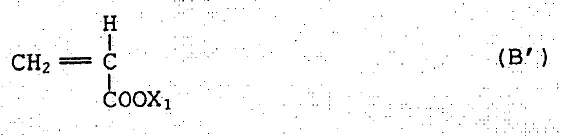 worin:
X₁ steht für ein Wasserstoffatom, ein Alkalimetallatom, ein Erdalkalimetallatom oder eine Ammonium-Gruppe;
p steht für eine ganze Zahl, die von 1 bis 250 variiert,
q steht für eine ganze Zahl, die von 0 bis 100 variiert, wobei q < p, wobei die Propylenoxid-Gruppen zwischen den Ethylenoxid-Gruppen statistisch oder nicht statistisch verteilt sein können; und
R₁ steht für eine Alkylgruppe mit 1 bis 12 Kohlenstoffatomen.

14. Verwendung nach Anspruch 1 oder 7, **dadurch gekennzeichnet, dass** das ausgewählte Dispergiermittel, das aus Struktureinheiten (1) und (2) aufgebaut ist, erhältlich ist durch eine partielle Veresterung einer Polymethacrylsäure mit einem Polyether, der eine freie Hydroxylgruppe enthält, die mit einer Carboxylfunktion der genannten Polymethacrylsäure reagieren kann, der allgemeinen Formel
HO-(C₂H₄O)ₙ(C₃H₆O)ₘ-R
worin:
n steht für eine ganze Zahl, die zwischen 1 und 250 variiert,
m steht für eine ganze Zahl, die von 0 bis 100 variiert, wobei m < n, wobei die Ethylenoxidgruppen und die Propylenoxidgruppen statistisch oder nicht statistisch verteilt sein können, und
R steht für eine Alkylgruppe mit 1 bis 12 Kohlenstoffatomen.

15. Verwendung nach Anspruch 7, **dadurch gekennzeichnet, dass** das ausgewählte Dispergiermittel, das aus Struktureinheiten (3) und (4) aufgebaut ist, erhältlich ist durch eine partielle Veresterung einer Polyacrylsäure mit einem Polyether, der eine freie Hydroxylgruppe enthält, die mit einer CarboxylFunktion der genannten Polymethacrylsäure reagieren kann, der allgemeinen Formel
HO-(C₂H₄O)ₚ(C₃H₆O)_{q}-R₁
worin:
p steht für eine ganze Zahl, die von 1 bis 250 variiert,
q steht für eine ganze Zahl, die von 0 bis 100 variiert, wobei q < p, wobei die Ethylenoxidgruppen und die Propylenoxidgruppen auf statistische Weise verteilt sind, und
R₁ steht für eine Alkylgruppe mit 1 bis 12 Kohlenstoffatomen.

16. Verwendung nach Anspruch 14, **dadurch gekennzeichnet, dass** die Polymethacrylsäure erhältlich ist durch Polymerisation einer Mischung von Monomeren, die mindestens 75 Mol-% Methacrylsäure und höchstens 25 Mol-% eines Methacrylsäure-Comonomers umfasst.

17. Verwendung nach Anspruch 14, **dadurch gekennzeichnet, dass** die Polymethacrylsäure erhältlich ist durch Polymerisation von Methacrylsäure.

18. Wässrige Zusammensetzung von wasserfreiem Calciumsulfat, die außerdem ein Dispergiermittel vom Polycarboxyl-Typ umfasst, das **dadurch gekennzeichnet ist, dass** das ausgewählte Dispergiermittel ein Dispergiermittel ist, das die Verbesserung der Aufrechterhaltung der Fließfähigkeit (Fluidität) in der Zeiteinheit und die Kontrolle (Steuerung) des Beginns und/oder des Endes des Abbindens der wässrigen Zusammensetzungen von wasserfreiem Calciumsulfat erlaubt, in denen das genannte Calciumsulfat mindestens 80 Gew.-% des gesamten hydraulischen Bindemittels darstellt, wobei das genannte Dispergiermittel umfasst 75 %, bezogen auf die Anzahl, Struktureinheiten (1) und (2) mit einer statistischen linearen Kettenverknüpfung, dargestellt durch die folgenden Formeln: 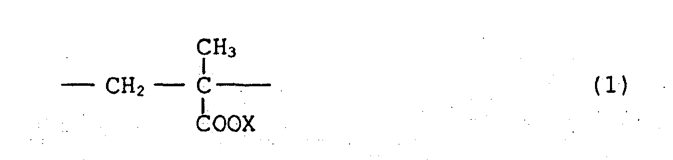 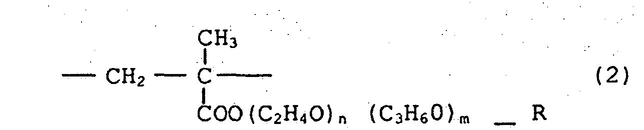 worin:
X steht für ein Wasserstoffatom, ein Alkalimetallatom, ein Erdalkalimetallatom oder eine Ammonium-Gruppe, wobei die genannten Struktureinheiten (1) gleich oder verschieden sein können;
n steht für eine ganze Zahl, die von 1 bis 250 variiert,
m steht für eine ganze Zahl, die von 0 bis 100 variiert, wobei m < n, wobei die Propylenoxidgruppen zwischen den Ethylenoxidgruppen statistisch oder nicht-statistisch verteilt sein können, und
R steht für eine Alkylgruppe mit 1 bis 12 Kohlenstoffatomen, wobei die genannten Struktureinheiten (2) gleich oder verschieden sein können;
wobei das Verhältnis zwischen der Anzahl der Struktureinheiten (2) und der Gesamtanzahl der Struktureinheiten (1) + (2), zwischen 5 % und 60 % liegt.

19. Wässrige Zusammensetzung von wasserfreiem Calciumsulfat, die außerdem umfasst eine Mischung von Dispergiermitteln vom Polycarboxyl-Typ, die **dadurch gekennzeichnet ist, dass** die Mischung von Dispergiermitteln eine Mischung von Dispergiermitteln darstellt, welche die Verwendung der Aufrechterhaltung der Fließfähigkeit (Fluidität) in der Zeiteinheit und die Kontrolle (Steuerung) des Beginns und/oder des Endes des Abbindens der wässrigen Zusammensetzungen von wasserfreiem Calciumsulfat erlaubt, in denen das genannte Calciumsulfat mindestens 80 Gew.-% des gesamten hydraulischen Bindemittels darstellt, wobei die genannte Mischung, bezogen auf 100 Gew.-% der Dispergiermittel, ausgedrückt als Trockengewicht, umfasst:
- 50 bis 90 Gew.-%, ausgedrückt als Trockengewicht, eines ausgewählten Dispergiermittels, das umfasst mindestens 75 %, bezogen auf die Anzahl, Struktureinheiten (1) und (2) mit einer statistischen linearen Kettenverknüpfung, und
- 10 bis 50 Gew.-%, ausgedrückt als Trockengewicht, eines anderen Dispergiermittels, das mindestens 75 %, bezogen auf die Anzahl, Struktureinheiten (3) und (4) mit einer statistischen linearen Kettenverknüpfung umfasst,
wobei die Struktureinheiten (1), (2), (3) und (4) dargestellt sind durch die folgenden Formeln: 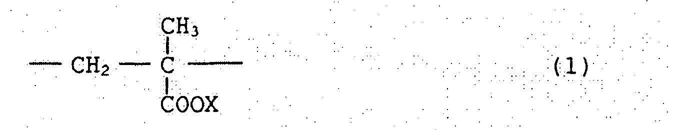 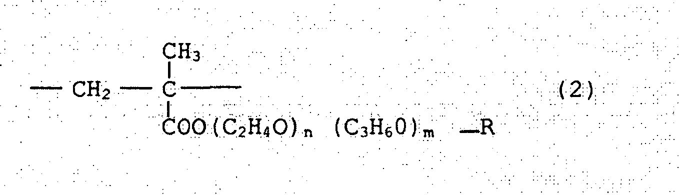 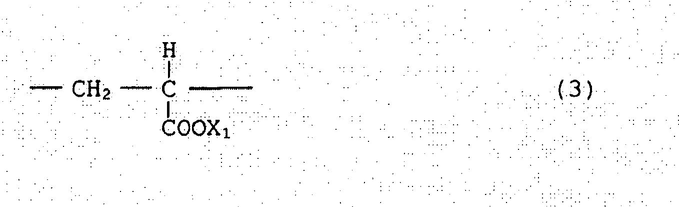 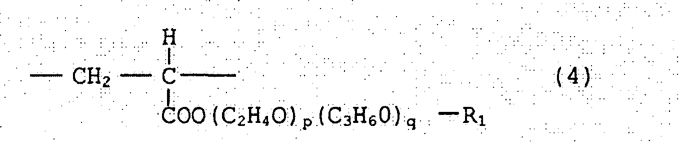 worin:
X und X₁, die gleich oder verschieden sind, stehen für ein Wasserstoffatom, ein Alkalimetallatom, ein Erdalkalimetallatom oder eine Ammoniumgruppe, wobei die Struktureinheiten (1) gleich oder verschieden sein können und die Struktureinheiten (3) gleich oder verschieden sein können;
n und p, die für gleiche oder verschiedene Werte stehen, ganze Zahlen darstellen, die von 1 bis 250 variieren,
m und q, die für gleiche oder verschiedene Werte stehen, ganze Zahlen darstellen, die von 0 bis 100 variieren, wobei m < n und q < p, wobei die Propylenoxid-Gruppen statistisch oder nicht statistisch zwischen den Ethylenoxid-Gruppen verteilt sein können; und
R und R₁, die gleich oder verschieden sind, stehen für eine Alkylgruppe mit 1 bis 12 Kohlenstoffatomen, wobei die Struktureinheiten (2) gleich oder verschieden sein können und die Struktureinheiten (4) gleich oder verschieden sein können.
